(19) Europäisches Patentamt / European Patent Office / Office européen des brevets

(11) EP 4 512 834 A2

(12) **EUROPEAN PATENT APPLICATION**

(43) Date of publication: **26.02.2025 Bulletin 2025/09**

(21) Application number: **24222960.7**

(22) Date of filing: **09.09.2022**

(51) International Patent Classification (IPC): ***C08F 4/659*** *(2006.01)*

(52) Cooperative Patent Classification (CPC): (C-Sets available) **C08F 210/16** (Cont.)

(84) Designated Contracting States: **AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2021 US 202163242751 P**

(62) Document number(s) of the earlier application(s) in accordance with Art. 76 EPC: **22800035.2 / 4 399 232**

(71) Applicant: **Dow Global Technologies LLC Midland, MI 48674 (US)**

(72) Inventors:
- **PEARSON, David M. Lake Jackson (US)**
- **LAITAR, David S. Midland (US)**
- **WITHAM, Cole A. Lake Jackson (US)**

(74) Representative: **Boult Wade Tennant LLP Salisbury Square House 8 Salisbury Square London EC4Y 8AP (GB)**

Remarks:
This application was filed on 23-12-2024 as a divisional application to the application mentioned under INID code 62.

(54) **BORATE COCATALYSTS FOR POLYOLEFIN PRODUCTION**

(57) A polymerization process comprising contacting ethylene and optionally one or more α-olefin monomers in a solution polymerization reactor in the presence of a catalyst system at a temperature of 120°C to 200°C, wherein the catalyst system comprises a procatalyst and an activator, wherein the activator comprises a anion and a cation, the anion is selected from:

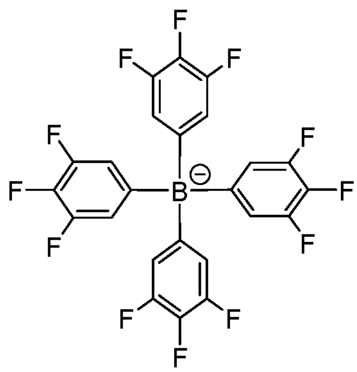

EP 4 512 834 A2

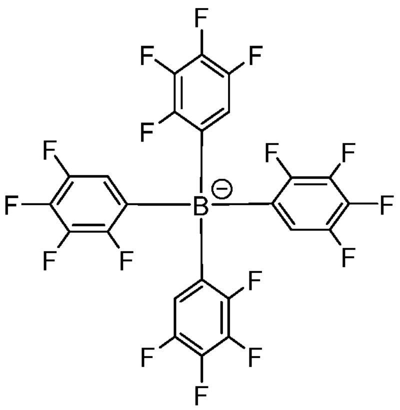

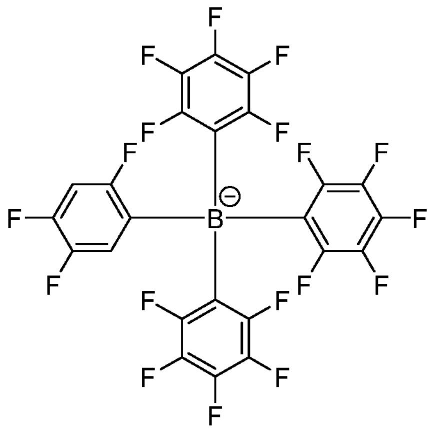

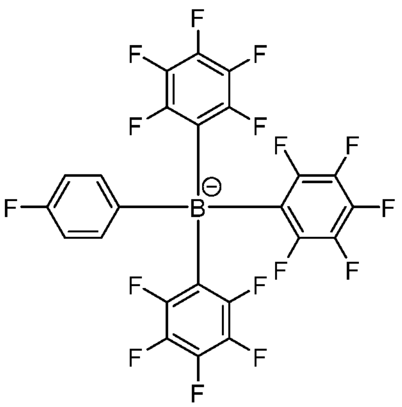

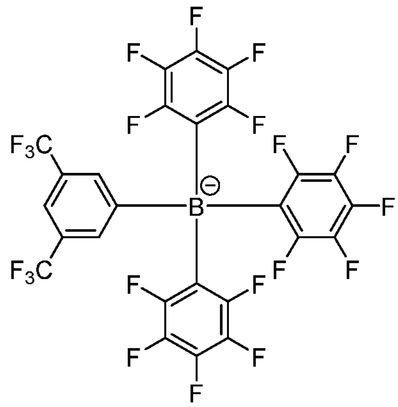

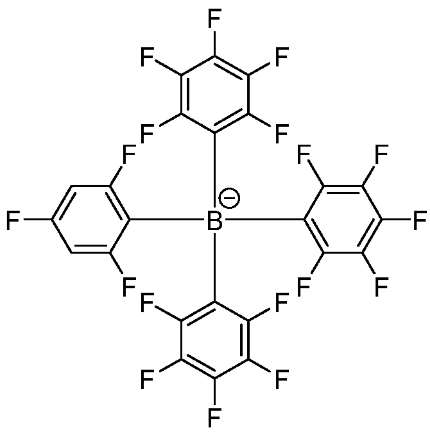

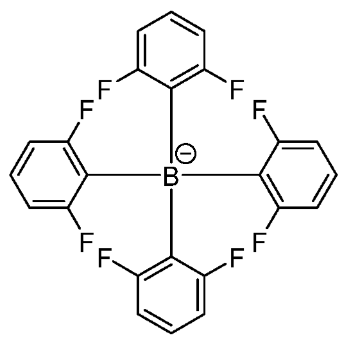

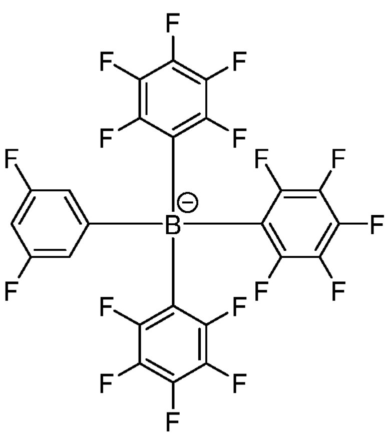

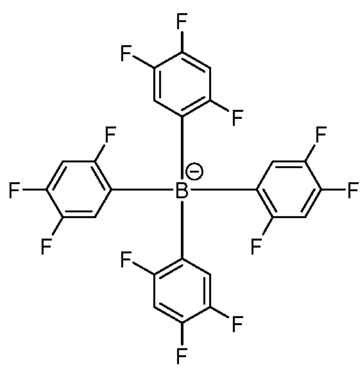



(Cont. next page)

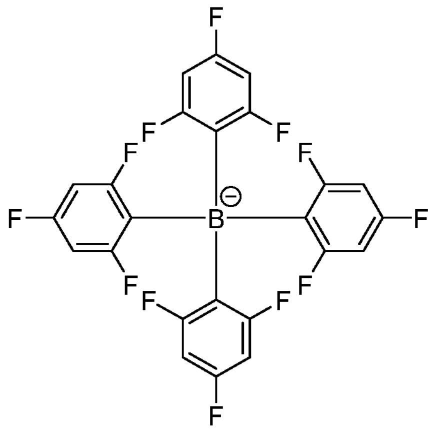

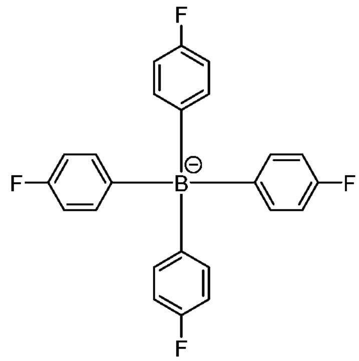

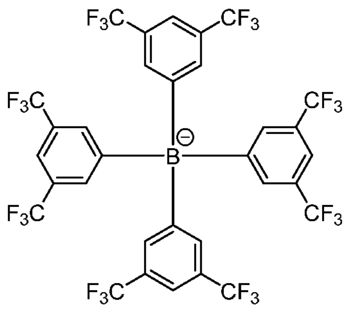

and 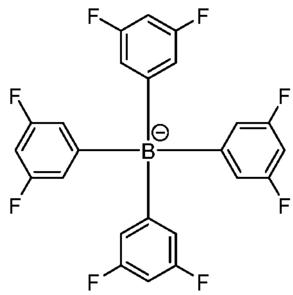 ;

and wherein the cation is $+N(H)(C_{18}H_{37})_2Me$.

(52) Cooperative Patent Classification (CPC): (Cont.)

C-Sets
**C08F 210/16, C08F 4/64044;**
**C08F 210/16, C08F 4/64144;**
**C08F 210/16, C08F 4/64193;**
**C08F 210/16, C08F 4/65908;**
C08F 210/16, C08F 210/14, C08F 2500/08, C08F 2500/12;
C08F 210/16, C08F 210/14, C08F 2500/34;
C08F 210/16, C08F 210/14, C08F 2500/34, C08F 2500/02;
C08F 210/16, C08F 210/14, C08F 2500/34, C08F 2500/03

## Description

CROSS-REFERENCE TO RELATED APPLICATION

This application claims the benefit of U.S. Provisional Application Serial No. 63/242,751 filed September 10, 2021, the entire disclosure of which is hereby incorporated herein by reference.

TECHNICAL FIELD

Embodiments of the present disclosure generally relate to borate anionic co-catalysts.

BACKGROUND

Since the discovery of Ziegler and Natta on heterogeneous olefin polymerizations, global polyolefin production reached approximately 150 million tons per year in 2015, and it is rising due to increasing market demand. This success is based in part on a series of important breakthroughs in co-catalyst technology. The co-catalysts discovered include aluminoxanes, boranes, and borates with triphenylcarbenium or ammonium cations. These co-catalysts activate the homogeneous single-site olefin polymerization catalysts, and polyolefins have been produced using these co-catalysts in industry.

Borate based co-catalysts in particular have contributed significantly to the fundamental understanding of olefin polymerization mechanisms and have enhanced the ability for precise control over polyolefin microstructures by deliberately tuning catalyst structures and processes. This results in stimulated interest in mechanistic studies and lead to the development of novel homogeneous olefin polymerization catalyst systems that have precise control over polyolefin microstructures and performance.

As part of the catalyst composition in $\alpha$-olefin polymerization reactions, the activator may have characteristics that are beneficial for the production of the $\alpha$-olefin polymer and for final polymer compositions including the $\alpha$-olefin polymer. Activator characteristics that increase the production of $\alpha$-olefin polymers include, but are not limited to: rapid procatalyst activation, high catalyst efficiency, high temperature capability, consistent polymer composition, and selective deactivation.

Olefin based polymers such as ethylene-based polymer and propylene-based polymers are produced via various catalyst systems. Selection of such catalyst systems can be an important factor contributing to the characteristics and properties of olefin-based polymers. The catalyst systems for producing polyethylene-based polymers may include a chromium-based catalyst system, a Ziegler-Natta catalyst system, or a molecular (either metallocene or non-metallocene) catalyst system.

As part of the catalyst system, the molecular polymerization procatalyst is activated to generate the catalytically active species for polymerization, and this can be achieved by any number of means. One such method employs an activator or co-catalyst that is a Bronsted acid. Bronsted acid salts containing weakly coordinating anions are commonly utilized to activate molecular polymerization procatalysts, particularly such procatalysts comprising Group IV metal complexes. Bronsted acid salts that are fully ionized are capable of transferring a proton to form a cationic derivative of such Group IV metal complexes.

For activators such as Bronsted acid salts, the cationic component may include cations capable of transferring a hydrogen ion such as ammonium, sulfonium, or phosphonium for example; or oxidizing cations such as ferrocenium, silver, or lead, for example; or highly Lewis acidic cations such as carbonium or silylium, for example.

However, once the cations activate the procatalyst, the activators may remain in the polymer composition As a result, the cations and anions may affect the polymer composition. Since not all ions diffuse equally, different ions affect the polymer composition differently. In particular, the size of the ion and the charge of the ion, the interaction of the ion with the surrounding medium, and the dissociation energy of the ion with available counterions will affect the ion's ability to diffuse through a surrounding medium, such as a solvent, a gel, or a polymer material.

Conventional olefin polymerization activators include weakly-coordinating or non-coordinating anions. It has been shown that weak coordination of the anion leads to increased catalytic efficiency of the cationic catalyst However, since the non-nucleophilic character of the non-coordinating anion also increases diffusion, the residual activator anion in the produced polymer will lower the electrical resistance of the polymer, thereby increasing electrical loss, and thereby decreasing the applicability of the produced polymer.

SUMMARY

Desirable characteristics of activators in polymerization reactions include abilities to increase the production of $\alpha$-olefin polymers, to increase the rate of procatalyst activation, to increase the overall efficiency of the catalyst to enable the

catalyst system to operate at high temperatures, to enable the catalyst system to provide consistent polymer composition, and to enable selective deactivation of the activators. Activators derived from the non-coordinating anion tetrakis(pentafluorophenyl)borate ($^{-}B(C_6F_5)_4$) capture many of these desirable characteristics. Nevertheless, under typical polymerization reaction conditions, the $^{-}B(C_6F_5)_4$ anion fails to decompose and may remain intact in the final polymer. The presence of an intact activator in the final polymer can be deleterious to the electrical properties of the final polymer.

Activators based on partially hydrolyzed metal trialkyls, such as methylaluminoxane (MAO) or modified methylaluminoxane (MMAO), for example, decompose more readily than $^{-}B(C_6F_5)_4$ anion, but suffer from poor high-temperature catalyst efficiency and broader compositional drift in the final polymer.

There are ongoing needs for activators that efficiently activate a procatalyst, that are readily broken down, and that perform well at high temperature. The catalyst systems of this disclosure include, in combination with Group IV metal -ligand complexes as catalysts, activators or co-catalysts that address such needs. In particular, the activators readily react with and activate the Group IV metal ligand complexes in the production of polyolefin resins, and the polyolefin resins exhibit useful polymer composition and electrical properties. The activators included in the catalyst systems of this disclosure exhibit characteristics, such as, abilities to increase the production of $\alpha$-olefin polymers, to increase the rate of procatalyst activation, to increase the overall efficiency of the catalyst to enable the catalyst system to operate at high temperatures, to enable the catalyst system to provide consistent polymer composition, and to enable selective deactivation of the activators.

According to some embodiments, a polymerization process comprising contacting ethylene and optionally one or more $\alpha$-olefin monomers in a solution polymerization reactor in the presence of a catalyst system at a temperature of 120°C to 200°C, wherein the catalyst system comprises a procatalyst and an activator, wherein the activator comprises a anion and a cation, the anion having a structure according to formula (I):

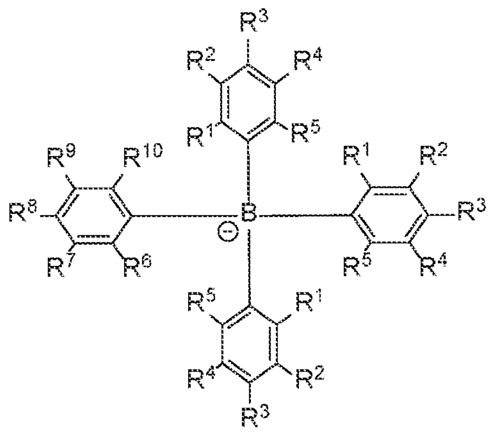

(I)

In formula (I), B is boron atom. Each $R^1$ and each $R^5$ is selected from -H or -F; each $R^2$, $R^3$, and $R^4$ is selected from -H, -F, $(C_1$-$C_{10})$hydrocarbyl, $(C_1$-$C_{10})$heterohydrocarbyl; $R^6$, $R^7$, $R^8$, $R^9$, and $R^{10}$ are independently selected from -H, -F, $(C_1$-$C_{10})$hydrocarbyl, $(C_1$-$C_{10})$heterohydrocarbyl, $-OR^C$, $-SiR^C_3$, wherein $R^C$ is -H or $(C_1$-$C_{20})$hydrocarbyl, and optionally $R^7$ and $R^8$ are connected to form a ring.

In formula (I), the structure according to formula (I) has a fluorine to carbon ratio (F/C) of less than or equal to 0.86, wherein F is the total number of fluorine atoms in the structure according to formula (I) and C is the total number of carbon atoms in the structure according to formula (I).

In formula (II), $M_2$ is nitrogen or phosphorous; and $R^{N1}$ is $(C_1$-$C_{30})$hydrocarbyl, $R^{N2}$ is $(C_2$-$C_{30})$hydrocarbyl, and $R^{N3}$ is $(C_3$-$C_{30})$hydrocarbyl.

BRIEF DESCRIPTION OF THE DRAWINGS

FIG. 1 is a Thermogravimetric analysis (TGA) isothermal plot for coatalyst samples of the percent loss as a function of time at 250 °C.

FIG. 2 is a Thermogravimetric analysis (TGA) isothermal plot for coatalyst samples of the percent loss as a function of time at 260 °C.

FIG. 3 is a Thermogravimetric analysis (TGA) isothermal plot for coatalyst samples of the percent loss as a function of time at 210 °C.

DETAILED DESCRIPTION

Specific embodiments of catalyst systems will now be described. It should be understood that the catalyst systems of this disclosure may be embodied in different forms and should not be construed as limited to the specific embodiments set forth in this disclosure Rather, embodiments are provided so that this disclosure will be thorough and complete, and will fully convey the scope of the subject matter to those skilled in the art.

Common abbreviations are listed below:

**Me :** methyl; **Et :** ethyl; **Ph** : phenyl; **Bn:** benzyl; ***i*-Pr** : iso-propyl; ***t*-Bu** : *tert*-butyl, ***t*-Oct :** *tert*-octyl (2,4,4-trimethylpentan-2-yl); **Tf** : trifluoromethane sulfonate; **THE** : tetrahydrofuran; **EtzO** : diethyl ether; **$CH_2Cl_2$** : dichloromethane; **CV** : column volume (used in column chromatography); **EtOAc** : ethyl acetate; **$C_6D_6$** : deuterated benzene or benzene-*d*6 : **$CDCl_3$** : deuterated chloroform; **$Na_2SO_4$** : sodium sulfate; **$MgSO_4$** : magnesium sulfate; **HCl** : hydrogen chloride; ***n*-BuLi:** butyllithium; ***t*-BuLi** : tert-butyllithium; **MAO :** methylaluminoxane; **MMAO** : modified methylaluminoxane; **GC :** gas chromatography; **LC :** liquid chromatography; **NMR** : nuclear magnetic resonance; **MS:** mass spectrometry, **mmol** : millimoles; **mL** : milliliters; **M** : molar; **min or mins:** minutes; **h** or **hrs :** hours; **d:** days.

The term "independently selected" is used herein to indicate that the R groups, such as, $R^1$, $R^2$, $R^3$, $R^4$, and $R^5$, can be identical or different (e.g., $R^1$, $R^2$, $R^3$, $R^4$, and $R^5$ may all be substituted alkyls or $R^1$ and $R^2$ may be a substituted alkyl and $R^3$ may be an aryl, etc). A chemical name associated with an R group is intended to convey the chemical structure that is recognized in the art as corresponding to that of the chemical name. Thus, chemical names are intended to supplement and illustrate, not preclude, the structural definitions known to those of skill in the art.

The term "procatalyst" refers to a transition metal compound that has olefin polymerization catalytic activity when combined with an activator. The term "activator" refers to a compound that chemically reacts with a procatalyst in a manner that converts the procatalyst to a catalytically active catalyst. As used herein, the terms "co-catalyst" and "activator" are interchangeable terms.

When used to describe certain carbon atom-containing chemical groups, a parenthetical expression having the form "($C_x$-$C_y$)" means that the unsubstituted form of the chemical group has from x carbon atoms to y carbon atoms, inclusive of x and y. For example, a ($C_1$-$C_{50}$)alkyl is an alkyl group having from 1 to 50 carbon atoms in its unsubstituted form. In some embodiments and general structures, certain chemical groups may be substituted by one or more substituents such as $R^S$. An $R^S$ substituted chemical group defined using the "($C_x$-$C_y$)" parenthetical may contain more than y carbon atoms depending on the identity of any groups $R^S$. For example, a "($C_1$-$C_{50}$)alkyl substituted with exactly one group $R^S$, where $R^S$ is phenyl (-$C_6H_5$)" may contain from 7 to 56 carbon atoms. Thus, in general when a chemical group defined using the "($C_x$-$C_y$)" parenthetical is substituted by one or more carbon atom-containing substituents $R^S$, the minimum and maximum total number of carbon atoms of the chemical group is determined by adding to both x and y the combined sum of the number of carbon atoms from all of the carbon atom-containing substituents $R^S$.

The term "substitution" means that at least one hydrogen atom (-H) bonded to a carbon atom of a corresponding unsubstituted compound or functional group is replaced by a substituent (e.g. $R^S$). The term "-H" means a hydrogen or hydrogen radical that is covalently bonded to another atom. "Hydrogen" and "-H" are interchangeable, and unless clearly specified have identical meanings.

The term "($C_1$-$C_{50}$)hydrocarbyl" means a hydrocarbon radical of from 1 to 50 carbon atoms and the term "($C_1$-$C_{50}$)hydrocarbylene" means a hydrocarbon diradical of from 1 to 50 carbon atoms, in which each hydrocarbon radical and each hydrocarbon diradical is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$ or unsubstituted.

In this disclosure, a ($C_1$-$C_{50}$)hydrocarbyl may be an unsubstituted or substituted ($C_1$-$C_{50}$)alkyl, ($C_3$-$C_{50}$) cycloalkyl, ($C_3$-$C_{20}$)cycloalkyl-($C_1$-$C_{20}$)alkylene, ($C_6$-$C_{40}$)aryl, or ($C_6$-$C_{20}$)aryl-($C_1$-$C_{20}$)alkylene (such as benzyl (-$CH_2$-$C_6H_5$)).

The term "($C_1$-$C_{50}$)alkyl" means a saturated straight or branched hydrocarbon radical containing from 1 to 50 carbon atoms, and the term "($C_1$-$C_{30}$)alkyl" means a saturated straight or branched hydrocarbon radical of from 1 to 30 carbon atoms. Each ($C_1$-$C_{50}$)alkyl and ($C1_1$-$C_{30}$)alkyl may be unsubstituted or substituted by one or more $R^S$ In some examples, each hydrogen atom in a hydrocarbon radical may be substituted with $R^S$, such as, for example trifluoromethyl Examples of unsubstituted ($C_1$-$C_{50}$)alkyl are unsubstituted ($C_1$-$C_{20}$)alkyl, unsubstituted ($C_1$-$C_{10}$)alkyl; unsubstituted ($C_1$-$C_5$)alkyl; methyl; ethyl; 1-propyl; 2-propyl; 1-butyl; 2-butyl; 2-methylpropyl; 1,1-dimethylethyl, 1-pentyl; 1-hexyl; 1-heptyl; 1-nonyl; and 1-decyl. Examples of substituted ($C_1$-$C_{40}$)alkyl are substituted ($C_1$-$C_{20}$)alkyl, substituted ($C_1$-$C_{10}$) alkyl, trifluoromethyl, and [$C_{45}$]alkyl. The term "[$C_{45}$]alkyl" means there is a maximum of 45 carbon atoms in the radical, including substituents, and is, for example, a ($C_{27}$-$C_{40}$)alkyl substituted by one $R^S$, which is a ($C_1$-$C_5$)alkyl, such as, for example, methyl, trifluoromethyl, ethyl, 1-propyl, 1-methylethyl, or 1,1-di methyl ethyl

The term ($C_3$-$C_{50}$)alkenyl means a branched or unbranched, cyclic or acyclic monovalent hydrocarbon radical containing from 3 to 50 carbon atoms, at least one double bond and is unsubstituted or substituted by one or more $R^S$. Examples of unsubstituted ($C_3$-$C_{50}$)alkenyl: n-propenyl, isopropenyl, n-butenyl, isobutenyl, octenyl, decenyl, cyclopentenyl, cyclopentadienyl, cyclohexenyl, and cyclohexadienyl. Examples of substituted ($C_3$-$C_{50}$)alkenyl: (2-trifluoromethyl) pent-1-enyl, (3-methyl)hex-1-eneyl, (3-methyl)hexa-1,4-dienyl and (Z)-l-(6-methylhept-3-en-1-yl)cyclohex-1-eneyl.

The term "($C_3$-$C_{50}$)cycloalkyl" means a saturated cyclic hydrocarbon radical of from 3 to 50 carbon atoms that is unsubstituted or substituted by one or more $R^S$. Other cycloalkyl groups (e.g., ($C_x$-$C_y$)cycloalkyl) are defined in an analogous manner as having from x to y carbon atoms and being either unsubstituted or substituted with one or more $R^S$ Examples of unsubstituted ($C_3$-$C_{40}$)cycloalkyl are unsubstituted ($C_3$-$C_{20}$)cycloalkyl, unsubstituted ($C_3$-$C_{10}$)cycloalkyl, cyclopropyl, cyclobutyl, cyclopentyl, cyclohexyl, cycloheptyl, cyclooctyl, cyclononyl, and cyclodecyl. Examples of substituted ($C_3$-$C_{40}$)cycloalkyl are substituted ($C_3$-$C_2$)cycloalkyl, substituted ($C_3$-$C_{10}$)cycloalkyl, and 1-fluorocyclohexyl.

The term "heteroatom," refers to an atom other than hydrogen or carbon. Examples of groups containing one or more than one heteroatom include O, S, S(O), $S(O)_2$, $Si(R^C)_2$, $P(R^P)$, $N(R^N)$, -N=$C(R^C)_2$, -$Ge(R^C)_2$-, -$Si(R^C)$-, boron (B), aluminum (Al), gallium (Ga). or indium (In), where each $R^C$ and each $R^P$ is unsubstituted ($C_1$-$C_{18}$)hydrocarbyl or -H, and where each $R^N$ is unsubstituted ($C_1$-$C_{18}$)hydrocarbyl. The term "heterohydrocarbon" refers to a molecule or molecular framework in which one or more carbon atoms of a hydrocarbon are replaced with a heteroatom. The term "($C_1$-$C_{50}$) heterohydrocarbyl" means a heterohydrocarbon radical of from 1 to 50 carbon atoms, and the term "($C_1$-$C_{50}$)heterohydrocarbylene" means a heterohydrocarbon diradical of from 1 to 50 carbon atoms. The heterohydrocarbon of the ($C_1$-$C_{50}$)heterohydrocarbyl or the ($C_1$-$C_{50}$)heterohydrocarbylene has one or more heteroatoms. The radical of the heterohydrocarbyl may be on a carbon atom or a heteroatom. The two radicals of the heterohydrocarbylene may be on a single carbon atom or on a single heteroatom. Additionally, one of the two radicals of the diradical may be on a carbon atom and the other radical may be on a different carbon atom; one of the two radicals may be on a carbon atom and the other on a heteroatom; or one of the two radicals may be on a heteroatom and the other radical on a different heteroatom. Each ($C_1$-$C_{50}$)heterohydrocarbyl and ($C_1$-$C_{50}$)heterohydrocarbylene may be unsubstituted or substituted (by one or more $R^S$), aromatic or non-aromatic, saturated or unsaturated, straight chain or branched chain, cyclic (including mono- and poly-cyclic, fused and non-fused polycyclic), or acyclic.

The ($C_1$-$C_{50}$)heterohydrocarbyl may be unsubstituted or substituted Non-limiting examples of the ($C_1$-$C_{50}$) heterohydrocarbyl include ($C_1$-$C_{50}$)heteroalkyl, ($C_1$-$C_{50}$)hydrocarbyl-O- ($C_1$-$C_{50}$)hydrocarbyl-S-, ($C_1$-$C_{50}$)hydrocarbyl-S(O)-, ($C_1$-$C_{50}$)hydrocarbyl-$S(O)_2$-, ($C_1$-$C_{50}$)hydrocarbyl-$Si(R^C)_2$-, ($C_1$-$C_{50}$)hydrocarbyl-$N(R^N)$-, ($C_1$-$C_{50}$)hydrocarbyl-$P(R^P)$-, ($C_2$-$C_{50}$)heterocycloalkyl, ($C_2$-$C_{19}$)heterocycloalkyl-($C_1$-$C_{20}$)alkylene, ($C_3$-$C_{20}$)cycloalkyl-($C_1$-$C_{19}$)heteroalkylene, ($C_2$-$C_{19}$)heterocycloalkyl-($C_1$-$C_{20}$)heteroalkylene, ($C_1$-$C_{50}$)heteroaryl, ($C_1$-$C_{19}$)heteroaryl-($C_1$-$C_{20}$)alkylene, ($C_6$-$C_{20}$)aryl-($C_1$-$C_{19}$)heteroalkylene, or ($C_1$-$C_{19}$)heteroaryl-($C_1$-$C_{20}$)heteroalkylene.

The term "($C_1$-$C_{50}$)heteroaryl" means an unsubstituted or substituted (by one or more $R^S$) mono-, bi-, or tricyclic heteroaromatic hydrocarbon radical of from 1 to 50 total carbon atoms and from 1 to 10 heteroatoms. A monocyclic heteroaromatic hydrocarbon radical includes one heteroaromatic ring; a bicyclic heteroaromatic hydrocarbon radical has two rings, and a tricyclic heteroaromatic hydrocarbon radical has three rings When the bicyclic or tricyclic heteroaromatic hydrocarbon radical is present, at least one of the rings in the radical is heteroaromatic. The other ring or rings of the heteroaromatic radical may be independently fused or non-fused and aromatic or non-aromatic. Other heteroaryl groups (e.g., ($C_x$-$C_y$)heteroaryl generally, such as ($C_1$-$C_{12}$)heteroaryl) are defined in an analogous manner as having from x to y carbon atoms (such as 1 to 12 carbon atoms) and being unsubstituted or substituted by one or more than one $R^S$. The monocyclic heteroaromatic hydrocarbon radical is a 5-membered ring or a 6-membered ring The 5-membered ring monocyclic heteroaromatic hydrocarbon radical has 5 minus h carbon atoms, where h is the number of heteroatoms and may be 1, 2, 3, or 4; and each heteroatom may be O, S, N. or P. Examples of 5-membered ring heteroaromatic hydrocarbon radicals include pyrrol-1-yl; pyrrol-2-yl; furan-3-yl, thiophen-2-yl; pyrazol-1-yl; isoxazol-2-yl; isothiazol-5-yl; imidazol-2-yl; oxazol-4-yl; thiazol-2-yl; 1,2,4-triazol-1-yl; 1,3,4-oxadiazol-2-yl; 1,3,4-thiadiazol-2-yl; tetrazol-1-yl; tetrazol-2-yl; and tetrazol-5-yl. The 6-membered ring monocyclic heteroaromatic hydrocarbon radical has 6 minus h carbon atoms, where h is the number of heteroatoms and may be 1 or 2 and the heteroatoms may be N or P. Examples of 6-membered ring heteroaromatic hydrocarbon radicals include pyridine-2-yl, pyrimidin-2-yl; and pyrazin-2-yl. The bicyclic heteroaromatic hydrocarbon radical can be a fused 5,6- or 6,6-ring system. Examples of the fused 5,6-ring system bicyclic heteroaromatic hydrocarbon radical are indol-1-yl; and benzimidazole-1-yl. Examples of the fused 6,6-ring system bicyclic heteroaromatic hydrocarbon radical are quinolin-2-yl; and isoquinolin-1-yl. The tricyclic heteroaromatic hydrocarbon radical can be a fused 5.6,5-; 5,6,6-; 6,5.6-; or 6,6.6-ring system. An example of the fused 5,6,5-ring system is 1,7-dihydropyrrolo[3,2-f] indol-1-yl. An example of the fused 5,6,6-ring system is 1H-benzo[f] indol-1-yl. An example of the fused 6,5,6-ring system is 9H-carbazol-9-yl. An example of the fused 6,6,6-ring system is acrydin-9-yl.

The term "($C_1$-$C_{50}$)heteroalkyl" means a saturated straight or branched chain radical containing one to fifty carbon atoms and one or more heteroatom. The term "($C_1$-$C_{50}$)heteroalkylene'' means a saturated straight or branched chain diradical containing from 1 to 50 carbon atoms and one or more than one heteroatoms. The heteroatoms of the heteroalkyls or the heteroalkylenes may include $Si(R^C)_3$, $Ge(R^C)_3$, $Si(R^C)_2$, $Ge(R^C)_2$, $P(R^P)_2$, $P(R^P)$, $N(R^N)_2$, $N(R^N)$, N, O, $OR^C$, S. $SR^C$, S(O), and $S(O)_2$, wherein each of the heteroalkyl and heteroalkylene groups are unsubstituted or are substituted by one or more $R^S$.

Examples of unsubstituted ($C_2$-$C_{40}$)heterocycloalkyl include unsubstituted ($C_2$-$C_{20}$)heterocycloalkyl, unsub-

stituted ($C_2$-$C_{10}$)heterocycloalkyl, aziridin-1-yl, oxetan-2-yl, tetrahydrofuran-3-yl, pyrrolidin-1-yl, tetrahydrothiophen-S,S-dioxide-2-yl, morpholin-4-yl, 1,4-dioxan-2-yl, hexahydroazepin-4-yl, 3-oxa-cyclooctyl, 5-thio-cyclononyl, and 2-aza-cyclodecyl.

The term "halogen atom" or "halogen" means the radical of a fluorine atom (F), chlorine atom (Cl), bromine atom (Br), or iodine atom (I). The term "halide" means anionic form of the halogen atom: fluoride ($F^-$), chloride ($Cl^-$), bromide ($Br^-$), or iodide ($I^-$).

The term "saturated" means lacking carbon-carbon double bonds, carbon-carbon triple bonds, and (in heteroatom-containing groups) carbon-nitrogen, carbon-phosphorous, and carbon-silicon double bonds Where a saturated chemical group is substituted by one or more substituents $R^S$, one or more double or triple bonds optionally may be present in substituents $R^S$. The term "unsaturated" means containing one or more carbon-carbon double bonds or carbon-carbon triple bonds, or (in heteroatom-containing groups) one or more carbon-nitrogen double bonds, carbon-phosphorous double bonds, or carbon-silicon double bonds, not including double bonds that may be present in substituents $R^S$, if any, or in aromatic rings or heteroaromatic rings, if any.

Embodiments of this disclosure include catalyst systems that include a procatalyst and an activator, wherein the activator comprises an anion and a cation, the anion having a structure according to formula (I):

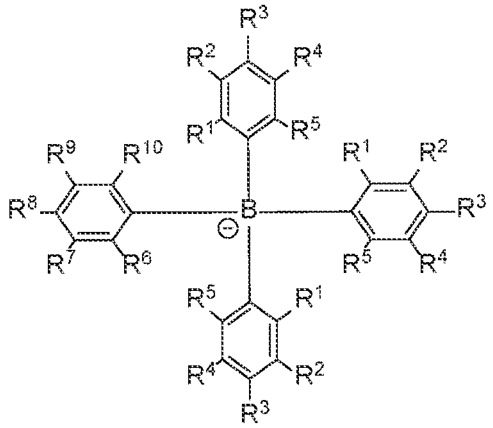

(I)

In formula (I), B is boron atom. Each $R^1$ and each $R^5$ is selected from -H or -F; each $R^2$, $R^3$, and $R^4$ is selected from -H, -F, ($C_1$-$C_{10}$)hydrocarbyl, ($C_1$-$C_{10}$)heterohydrocarbyl; $R^6$, $R^7$, $R^8$, $R^9$, and $R^{10}$ are independently selected from -H, -F, ($C_1$-$C_{10}$)hydrocarbyl, ($C_1$-$C_{10}$)heterohydrocarbyl, $-OR^C$, $-SiR^C_3$, wherein $R^C$ is -H or ($C_1$-$C_{20}$)hydrocarbyl, and optionally $R^7$ and $R^8$ are connected to form a ring. In one or more embodiments, in formula (I), $R^C$ is -H or ($C_1$-$C_{10}$)hydrocarbyl; or -H or ($C_1$-$C_{10}$)alkyl

In formula (I), the structure according to formula (I) has a fluorine to carbon ratio (F/C) of less than or equal to 0.86, wherein F is the total number of fluorine atoms in the structure according to formula (I) and C is the total number of carbon atoms in the structure according to formula (I).

In one or more embodiments, the activator has a thermal percent decomposition of greater than 10% as measured by Thermal Gravimetric Analysis.

In some embodiments, in formula (I), when three or more of $R^6$, $R^7$, $R^8$, $R^9$, and $R^{10}$ are fluorine atoms, at least one of $R^1$, $R^2$, $R^3$, $R^4$, and $R^5$ of each individual ring is a -H. In various embodiments, when none of $R^6$, $R^7$, $R^8$, $R^9$, and $R^{10}$ are fluorine atoms, at least four of $R^1$, $R^2$, $R^3$, $R^4$, and $R^5$ are fluorine atoms.

In some embodiments, each of $R^1$, $R^2$, $R^3$, $R^4$, and $R^5$ are fluorine atoms. In some embodiments, each of $R^2$, $R^3$, $R^4$, and $R^5$ are fluorine atoms. In one or more embodiments, $R^2$, $R^3$, and $R^4$ are fluorine atoms. In various embodiments, $R^1$, $R^3$, and $R^5$ are fluorine atoms. In some embodiments, $R^2$ and $R^5$ are $-CF_3$ or fluorine atoms. In one or more embodiments, $R^2$, $R^3$, and $R^5$ are fluorine atoms.

In one or more embodiments, $R^6$, $R^7$, $R^8$, $R^9$, and $R^{10}$ are fluorine atoms. In some embodiments, $R^7$, $R^8$, $R^9$, and $R^{10}$ are fluorine atoms; or $R^8$, and $R^9$ are fluorine atoms. In various embodiments, $R^7$ and $R^9$ are $-CF_3$. In some embodiments, $R^6$ and $R^{10}$ are fluorine atoms. In one or more embodiments, $R^6$, $R^8$, and $R^{10}$ are fluorine atoms.

In some embodiments, in formula (I), the total number of fluorine atoms is 4 to 18. In one or more embodiments, the value of fluorine to carbon ratio (F/C) of less than or equal to 0.81. In various embodiments, the value of fluorine to carbon ratio (F/C) of less than or equal to 0.80.

In embodiments, the polymerization process includes polymerizing ethylene and optionally one or more α-olefin monomers in a solution polymerization reactor in the presence of a catalyst system. A produced polymer is obtained and heated to a thermal decomposition temperature for at least 1 minute.

In embodiments, the catalyst system in the polymerization process includes a procatalyst and an activator,

wherein the activator comprises a anion and a cation, the anion having a structure according to formula (I):

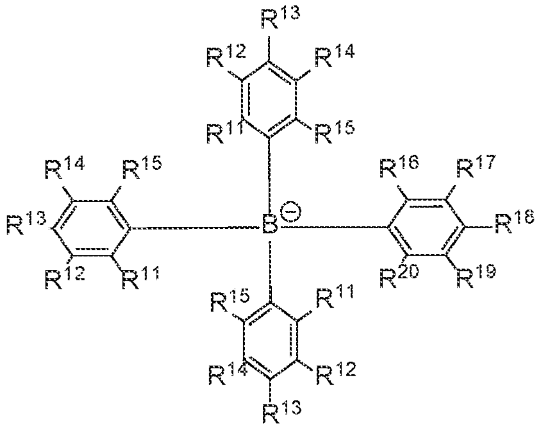

(II)

In formula (II), B is boron atom. Each $R^{11}$ and each $R^{15}$ is selected from -H or fluorine atom. Each $R^{12}$, $R^{13}$, and $R^{14}$ is selected from -H, fluorine atom, $(C_1-C_{40})$hydrocarbyl, $(C_1-C_{40})$heterohydrocarbyl, provided that: (1) at least three of $R^{11}$, $R^{12}$, $R^{13}$, $R^{14}$, and $R^{15}$ on each individual ring are fluorine atoms or (2) at least one of $R^{11}$, $R^{12}$, $R^{13}$, $R^{14}$, and $R^{15}$ on each individual ring is $-CF_3$. $R^{16}$, $R^{17}$, $R^{18}$, $R^{19}$, and $R^{20}$ are independently selected from -H, fluorine atom, $(C_1-C_{40})$hydrocarbyl, $(C_1-C_{40})$heterohydrocarbyl, $-OR^C$, $-SiR^C_3$, and optionally $R^7$ and $R^8$ are connected to form a ring. In one or more embodiments, in formula (II), $R^C$ is -H, $(C_1-C_{20})$hydrocarbyl, $(C_1-C_{20})$hydrocarbyl, or $(C_1-C_{10})$alkyl.

The structure according to formula (II) does not include:

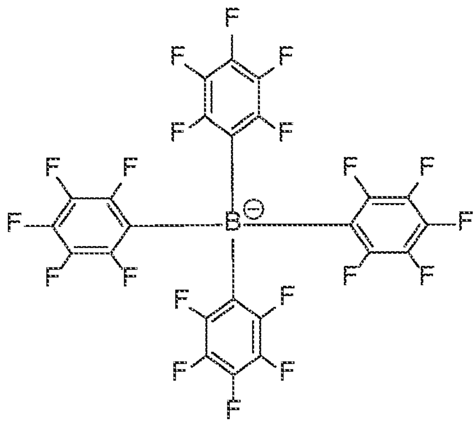

In some embodiments, in formula (II), when three or more of $R^{16}$, $R^{17}$, $R^{18}$, $R^{19}$, and $R^{20}$ are fluorine atoms, at least one of $R^{11}$, $R^{12}$, $R^{13}$, $R^{14}$, and $R^{15}$ of each individual ring is a -H. In various embodiments, when none of $R^{16}$, $R^{17}$, $R^{18}$, $R^{19}$, and $R^{20}$ are fluorine atoms, at least four of $R^{11}$, $R^{12}$, $R^{13}$, $R^{14}$, and $R^{15}$ are fluorine atoms.

In some embodiments, in formula (II), each of $R^{11}$, $R^{12}$, $R^{13}$, $R^{14}$, and $R^{15}$ are fluorine atoms. In some embodiments, each of $R^{12}$, $R^{13}$, $R^{14}$, and $R^{15}$ are fluorine atoms. In one or more embodiments, $R^{12}$, $R^{13}$, and $R^{14}$ are fluorine atoms. In various embodiments, $R^{11}$, $R^{13}$, and $R^{15}$ are fluorine atoms. In some embodiments, $R^{12}$ and $R^{15}$ are $-CF_3$ or fluorine atoms. In one or more embodiments, $R^2$, $R^3$, and $R^5$ are fluorine atoms.

In one or more embodiments, in formula (II), $R^{16}$, $R^{17}$, $R^{18}$, $R^{19}$, and $R^{20}$ are fluorine atoms. In some embodiments, $R^{17}$, $R^{18}$, $R^{19}$, and $R^{20}$ are fluorine atoms; or $R^{18}$, and $R^{19}$ are fluorine atoms. In various embodiments, $R^{17}$ and $R^{19}$ are $-CF_3$. In some embodiments, $R^6$ and $R^{10}$ are fluorine atoms. In one or more embodiments, $R^{16}$, $R^{18}$, and $R^{20}$ are fluorine atoms.

In some embodiments, in formula (II), the total number of fluorine atoms is 4 to 18. In one or more embodiments, the value of fluorine to carbon ratio (F/C) of less than or equal to 0.81. In various embodiments, the value of fluorine to carbon ratio (F/C) of less than or equal to 0.80.

In one or more embodiments, the thermal decomposition temperature is greater than 200°C or at least 250°C. In some embodiments, the thermal decomposition temperature is from 200°C to 500°C.

In some embodiments of the polymerization process, the produced polymer is heated at the thermal decomposition temperature for at least 5 minutes or at least 10 minutes. In some embodiments, the produced polymer is heated at the thermal decomposition temperature for 5 to 30 minutes

In embodiments, the catalyst system includes an anion of formula (I) and a cation. The cation is any cation having a formal charge of +1. In some embodiments, the cation is selected from the group consisting of tertiary carbocations, alkyl-substituted ammonium ions, anilinium, alkyl-substituted alumocenium, or ferrocenium.

In some embodiments of the metallic ionic complex, the countercation is chosen from a protonated tri[($C_1$-$C_{40}$) hydrocarbyl] ammonium cation. In some embodiments, the countercation is a protonated trialkylammonium cation, containing one or two ($C_{14}$-$C_{20}$)alkyl on the ammonium cation. In one or more embodiments, the countercation is $^{+}N(CH_3)HR^N{}_2$, wherein $R^N$ is ($C_{16}$-$C_{18}$)alkyl. In some embodiments, the countercation is chosen from methyldi(octadecyl) ammonium cation or methyldi(tetradecyl)ammonium cation. The methyldi(octadecyl)ammonium cation or methyldi(tetradecyl)ammonium cation are collectively referred to herein as armeenium cations. Ionic compounds having an armeenium cations are from Nouryon under the trade name Armeen™ M2HT. In other embodiments, the countercation is triphenylmethyl carbocation ($Ph_3C^+$), also referred to as trityl. In one or more embodiments, the countercation is a tris-substituted-triphenylmethyl carbocation, such as $^{+}C(C_6H_4R^C)_3$, wherein each $R^C$ in $^{+}C(C_6H_4R^C)_3$ is independently chosen from ($C_1$-$C_{30}$)alkyl. In other embodiments, the countercation is chosen from anilinium, ferrocenium, or aluminoceniums. Anilinium cations are protonated nitrogen cations, such as $[HMe_2N(C_6H_5)]^+$. Aluminoceniums are aluminum cations, such as $R^S{}_2Al(THF)_2{}^+$, where $R^S$ is chosen from ($C_1$-$C_{30}$)alkyl.

In illustrative embodiments, the catalyst systems may include an activator having an anion and cation, wherein the anion is according to formula (I) and the activator a structure of any:

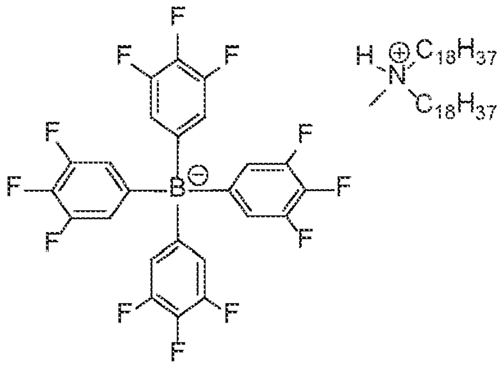

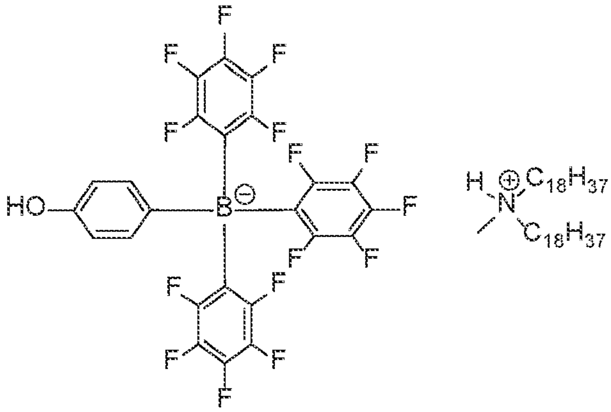

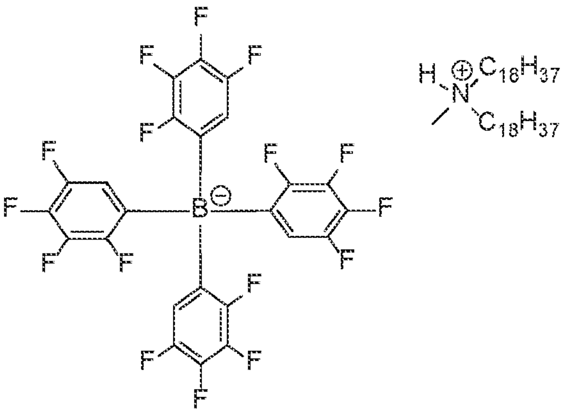

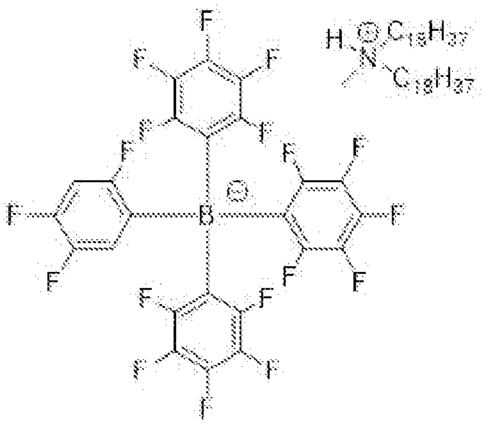

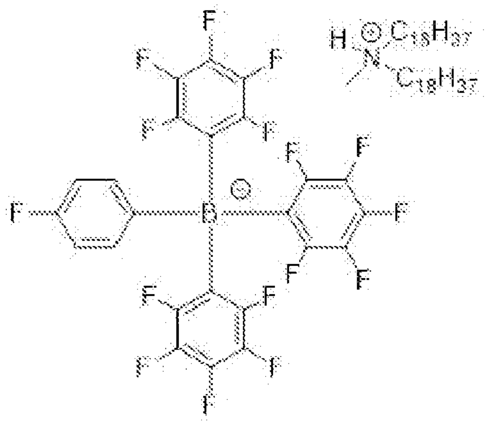

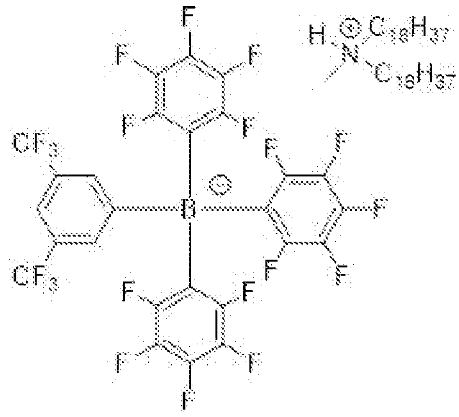

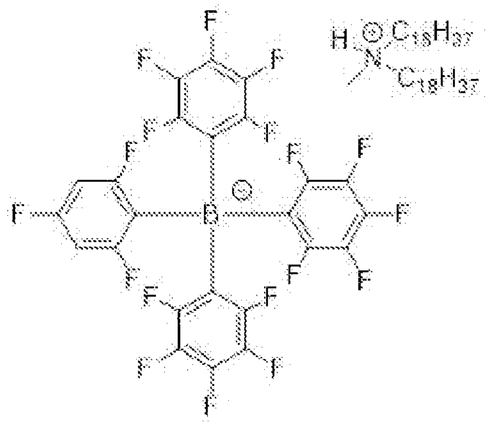

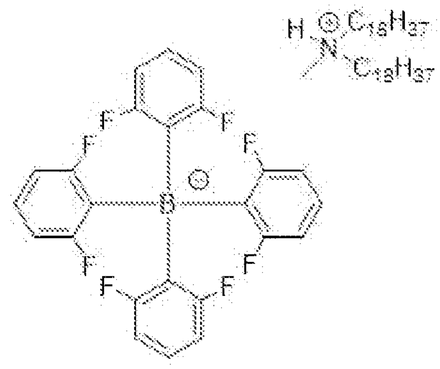

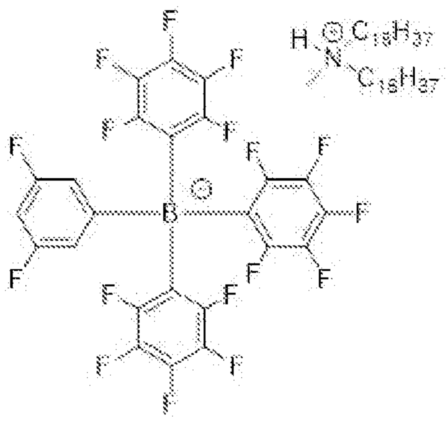

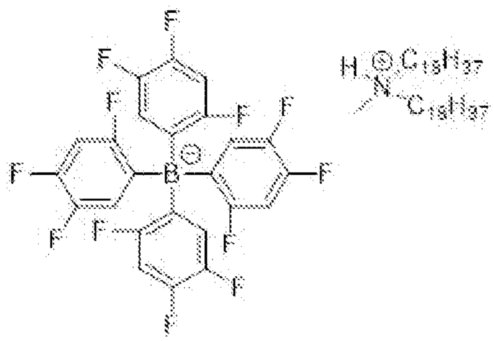

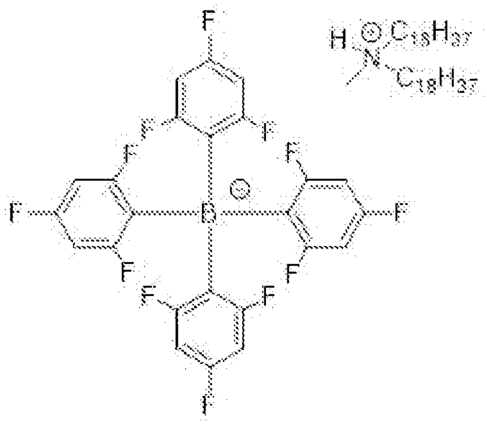

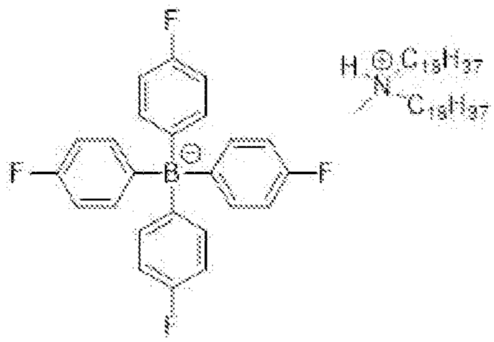

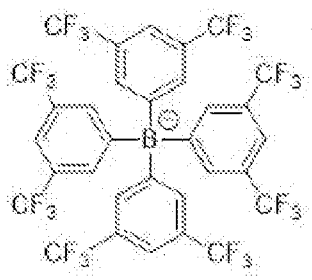

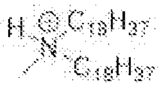

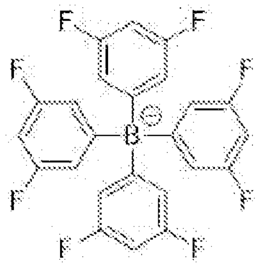

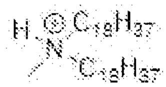

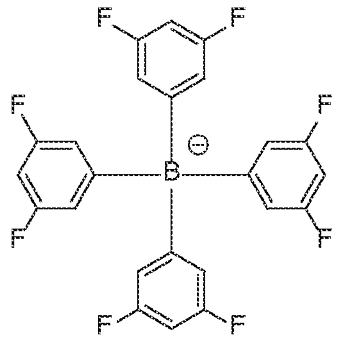

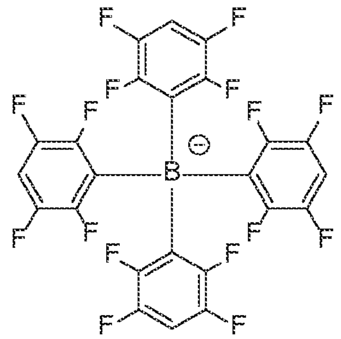

$^{+}N(H)(C_{18}H_{37})_2Me$ $^{+}N(H)(C_{18}H_{37})_2Me$ $^{+}N(H)(C_{18}H_{37})_2Me$

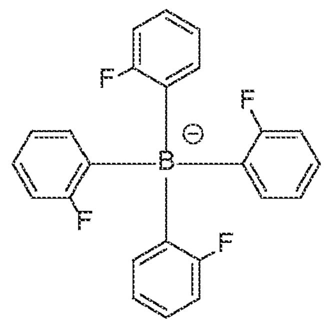

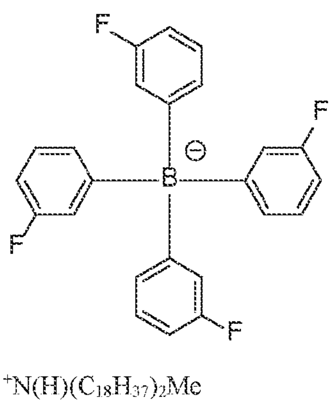

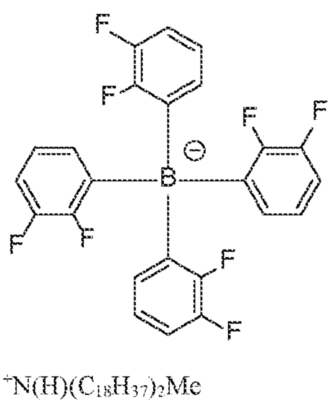

$^{+}N(H)(C_{18}H_{37})_2Me$ $^{+}N(H)(C_{18}H_{37})_2Me$

$^{+}N(H)(C_{18}H_{37})_2Me$

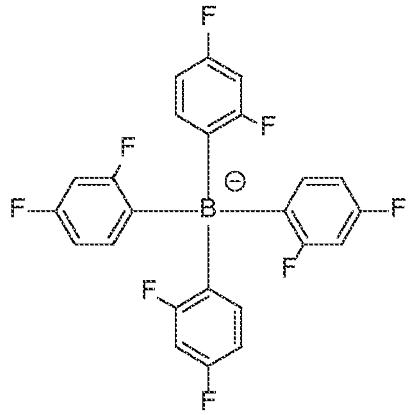

$^{+}N(H)(C_{18}H_{37})_2Me$

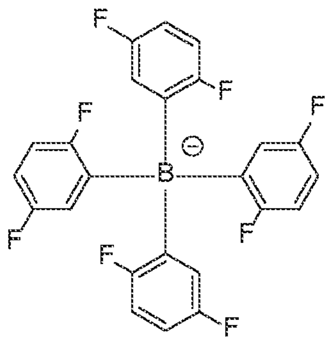

$^{+}N(H)(C_{18}H_{37})_2Me$

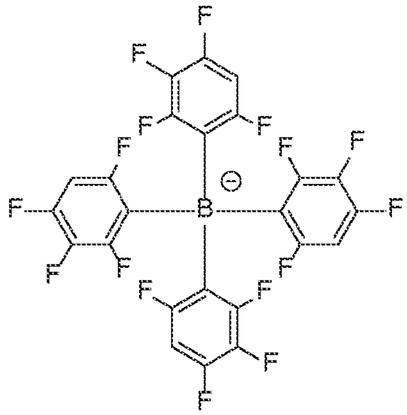

$^{+}N(H)(C_{18}H_{37})_2Me$

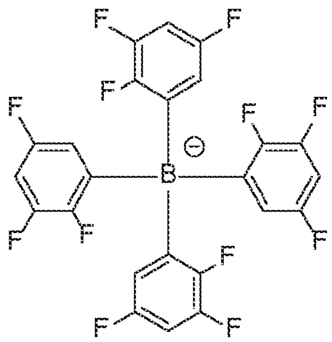

$^{+}N(H)(C_{18}H_{37})_2Me$

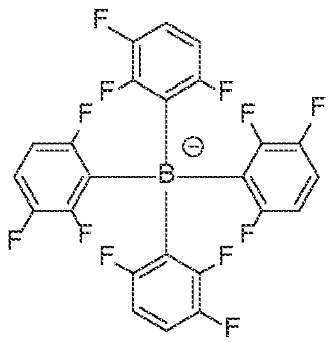

$^{+}N(H)(C_{18}H_{37})_2Me$

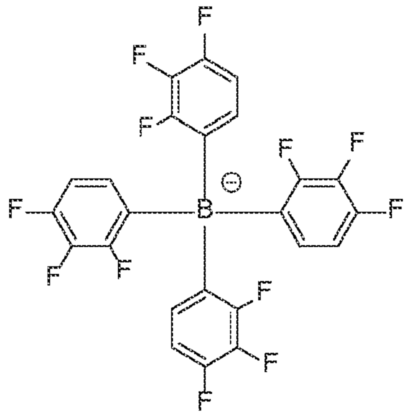

$^{+}N(H)(C_{18}H_{37})_2Me$

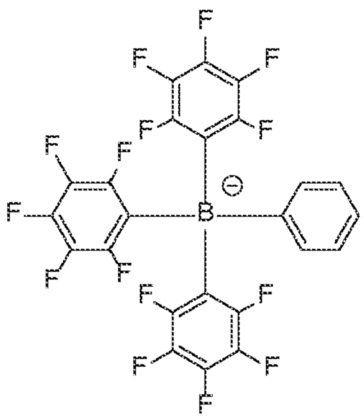

$^{+}N(H)(C_{18}H_{37})_2Me$

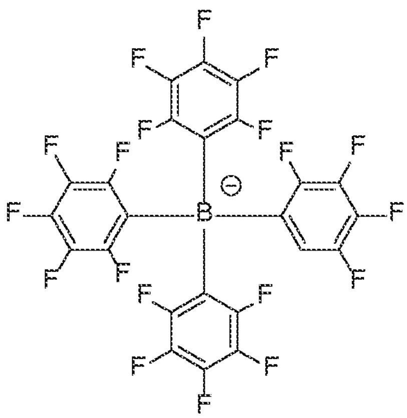

$^{+}N(H)(C_{18}H_{37})_2Me$

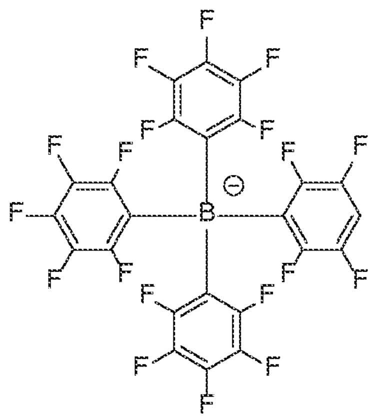

$^{+}N(H)(C_{18}H_{37})_2Me$

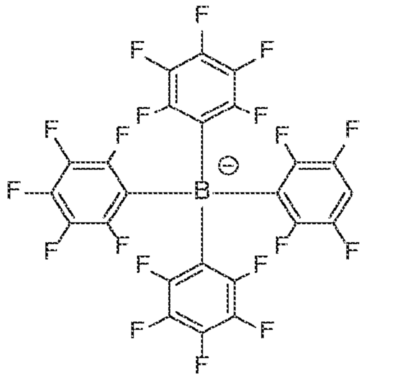

$^{+}N(H)(C_{18}H_{37})_2Me$

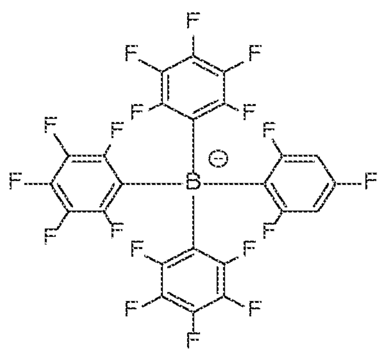

$^{+}N(H)(C_{18}H_{37})_2Me$

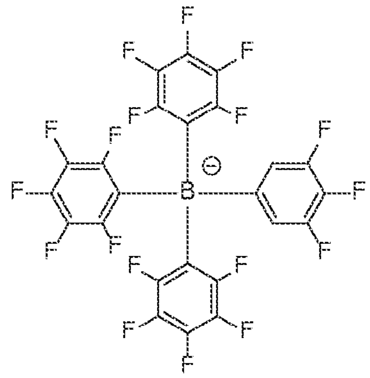

$^{+}N(H)(C_{18}H_{37})_2Me$

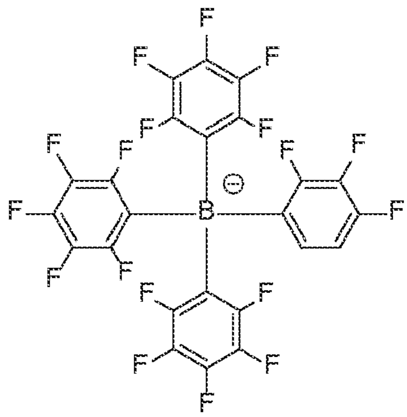

$^{+}N(H)(C_{18}H_{37})_2Me$

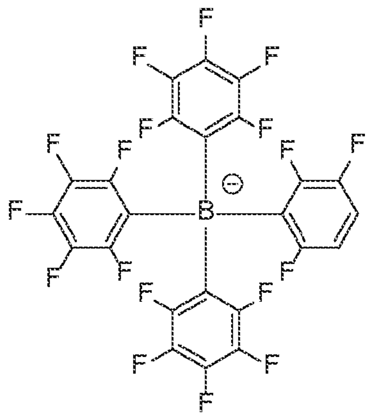

$^{+}N(H)(C_{18}H_{37})_2Me$

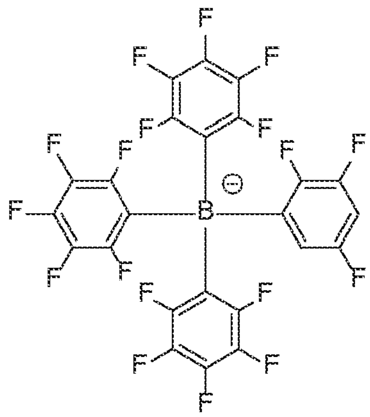

$^{+}N(H)(C_{18}H_{37})_2Me$

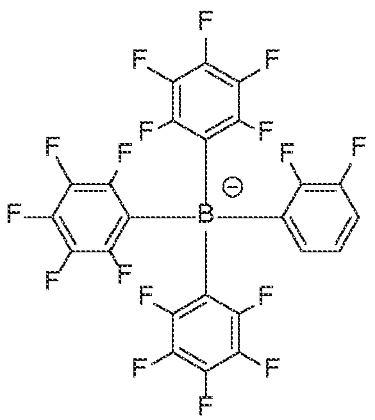

$^{+}N(H)(C_{18}H_{37})_2Me$

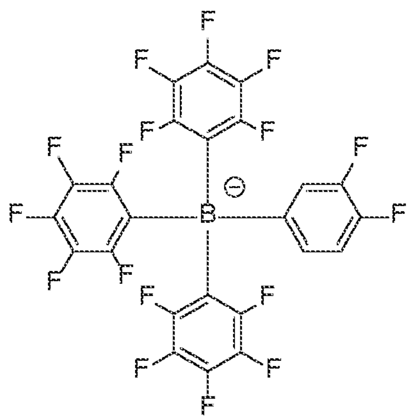

$^{+}N(H)(C_{18}H_{37})_2Me$

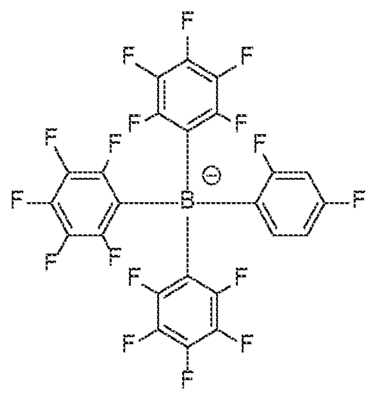

$^{+}N(H)(C_{18}H_{37})_2Me$

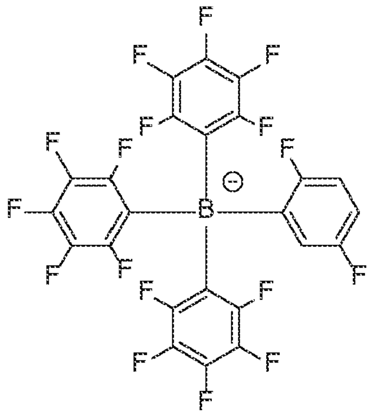

$^{+}N(H)(C_{18}H_{37})_2Me$

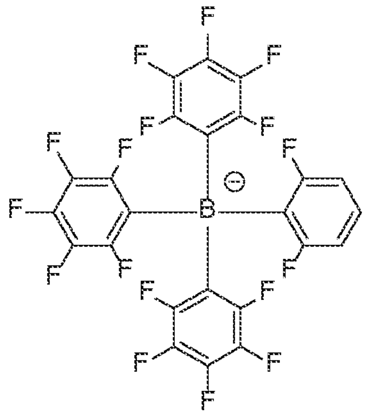

$^{+}N(H)(C_{18}H_{37})_2Me$

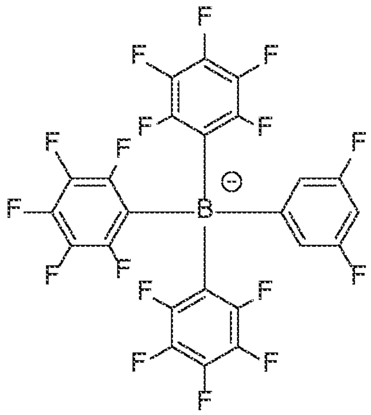

$^{+}N(H)(C_{18}H_{37})_2Me$

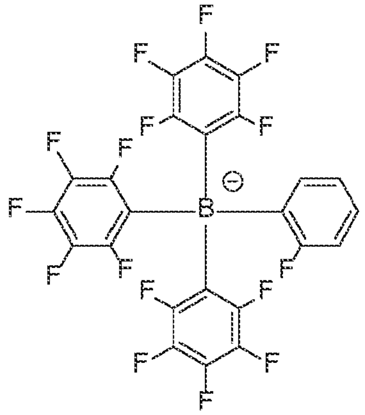

$^{+}N(H)(C_{18}H_{37})_2Me$

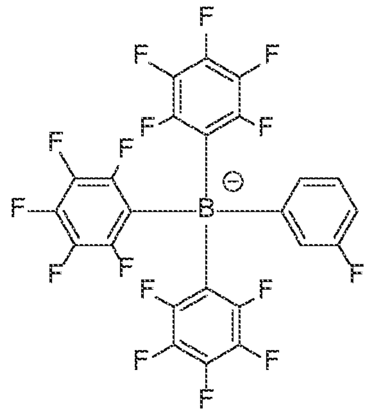

$^{+}N(H)(C_{18}H_{37})_2Me$

and

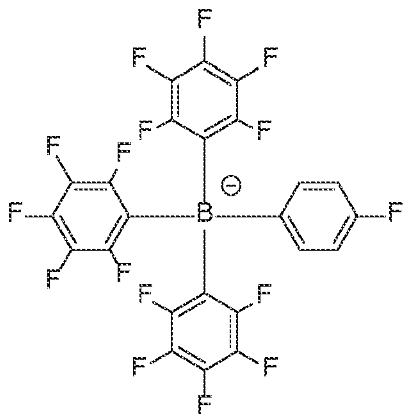

$^{+}N(H)(C_{18}H_{37})_2Me$

**Catalyst System Components**

The catalyst system may include procatalyst. The procatalyst may be rendered catalytically active by contacting the complex to, or combining the complex with, a metallic activator having anion of formula (I) and a countercation. The procatalyst may be chosen from a metal-ligand complex, such as a Group IV metal-ligand complex (Group IVB according to CAS or Group 4 according to IUPAC naming conventions), such as a titanium (Ti) metal-ligand complex, a zirconium (Zr) metal-ligand complex, or a hafnium (Hf) metal-ligand complex. Non-limiting examples of the procatalyst include catalysts, procatalysts, or catalytically active compounds for polymerizing ethylene-based polymers are disclosed in one or more of US 8372927; WO 2010022228; WO 2011102989; US 6953764; US 6900321; WO 2017173080; US 7650930; US 6777509 WO 99/41294; US 6869904; or WO 2007136496, all of which documents are incorporated herein by reference in their entirety

In one or more embodiments, the catalyst system includes a metal-ligand complex procatalyst, in which the catalyst is ionic. Not intending to be limiting, examples of the homogeneous catalysts include metallocene complexes, constrained geometry metal-ligand complexes (Li, H.; Marks, T. J., Proc. Natl. Acad. Sci. U. S. A. 2006, 103, 15295-15302; Li, H.; Li, L., Schwartz, D J.; Metz, M. V; Marks, T. J.; Liable-Sands, L.; Rheingold, A. L., J. Am. Chem. Soc. 2005, 127, 14756-14768; McInnis, J. P.; Delferro, M.; Marks, T. J., Acc. Chem. Res. 2014, 47, 2545-2557; Delferro, M; Marks, T. J., Chem. Rev 2011, 111, 2450-2485.), pyridylamido Hf (or Zr, Ti) complexes (Arriola, D. J.; Carnahan, E. M.; Hustad, P. D.; Kuhlman, R. L.; Wenzel, T. T., Science, 2006, 312, 714-719.; Arriola, D. J.; Carnahan, E. M.; Cheung, Y. W.; Devore, D. D.; Graf, D. D.; Hustad, P. D.; Kuhlman, R. L.; Shan, C. L. P.; Poon, B. C.; Roof, G. R., US9243090 B2, 2016.), phenoxyimine metal complexes (Makio, H.; Terao, H.; Iwashita, A.; Fujita, T., Chem. Rev. 2011, 111, 2363-2449.), bis-biphenylphenoxy metal-ligand complexes (Arriola, D. J.; Bailey, B. C.; Klosin, J.; Lysenko, Z.; Roof, G. R.; Smith, A. J. WO2014209927A1, 2014.), etc. The following references summarize metal complexes as olefin polymerization catalysts both in industry and academia: Stürzel, M.; Mihan, S.; Mülhaupt, R., Chem. Rev. 2016, 116, 1398-1433.; Busico, V., Dalton Transactions 2009,

8794-8802.; Klosin, J ; Fontaine, P. P.; Figueroa, R., Acc. Chem. Res. 2015, 48, 2004-2016. All references listed in the detailed description of the present disclosure are incorporated herein.

In one or more embodiments, the Group IV metal-ligand complex includes a bis(phenylphenoxy) Group IV metal-ligand complex or a constrained geometry Group IV metal-ligand complex.

According to some embodiments, the Group IV metal-ligand procatalyst complex may include a bis(phenylphenoxy) structure according to formula (X):

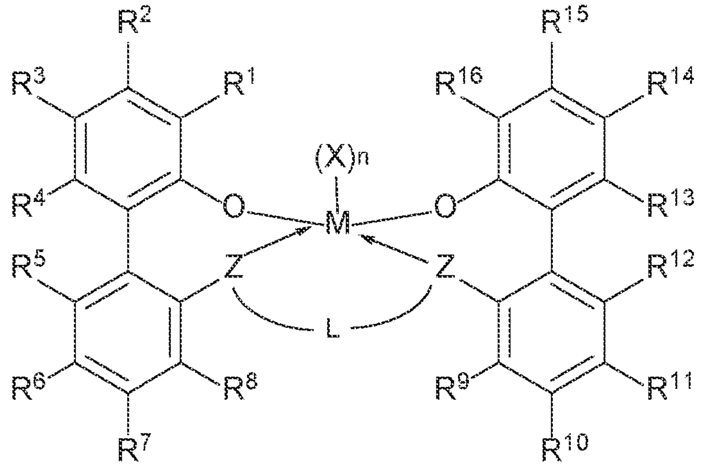
(X)

In formula (X), M is a metal chosen from titanium, zirconium, or hafnium, the metal being in a formal oxidation state of +2, +3, or +4. Subscript n of $(X)_n$ is 0, 1, or 2. When subscript n is 1, X is a monodentate ligand or a bidentate ligand, and when subscript n is 2, each X is a monodentate ligand. L is a diradical selected from the group consisting of $(C_1-C_{40})$ hydrocarbylene, $(C_1-C_{40})$heterohydrocarbylene, $-Si(R^C)_2-$, $-Si(R^C)_2OSi(R^C)_2-$, $-Si(R^C)_2C(R^C)_2-$, $-Si(R^C)_2Si(R^C)_2-$, $-Si(R^C)_2C(R^C)_2Si(R^C)_2-$, $-C(R^C)_2Si(R^C)_2C(R^C)_2-$, $-N(R^N)C(R^C)_2-$, $-N(R^N)N(R^N)-$, $-C(R^C)_2N(R^N)C(R^C)_2-$ $-Ge(R^C)_2-$, $-P(R^P)-$, $-N(R^N)-$, -O-, -S-, -S(O)-, $-S(O)_2-$, $-N=C(R^C)-$, -C(O)O-, -OC(O)-, -C(O)N(R)-, and $-N(R^C)C(O)-$. Each Z is independently chosen from -O-, -S-, $-N(R^N)-$, or $-P(R^P)-$, $R^2$-$R^4$, $R^5$-$R^{-8}$, $R^9$-$R^{12}$ and $R^{13}$-$R^{15}$ are independently selected from the group consisting of -H, $(C_1-C_{40})$hydrocarbyl, $(C_1-C_{40})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)-$, $R^CS(O)_2-$, $-N=C(R^C)_2$, $R^CC(O)O-$, $R^COC(O)-$, $R^CC(O)N(R)-$, $(R^C)_2NC(O)-$, and halogen. $R^1$ and $R^{16}$ are selected from radicals having formula (XI), radicals having formula (XII), and radicals having formula (XIII):

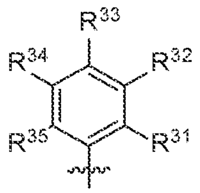
(XI)

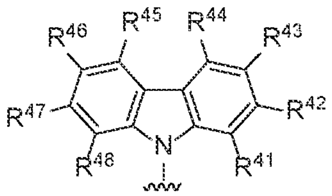
(XII)

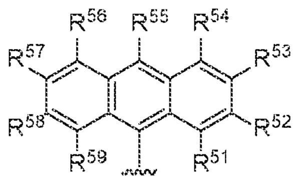
(XIII)

In formulas (XI), (XII), and (XIII), each of $R^{31}$-$R^{35}$, $R^{41}$-$R^{48}$, and $R^{51}$-$R^{59}$ is independently chosen from -H, $(C_1-C_{40})$hydrocarbyl, $(C_1-C_{40})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $CF_3$, $R^CS(O)-$, $R^CS(O)_2-$, $(R^C)_2C=N-$, $R^CC(O)O-$, $R^COC(O)-$, $R^CC(O)N(R^N)-$, $(R^C)_2NC(O)-$, or halogen.

In one or more embodiments, each X can be a monodentate ligand that, independently from any other ligands X, is a halogen, unsubstituted $(C_1-C_{20})$hydrocarbyl, unsubstituted $(C_1-C_{20})$hydrocarbylC(O)O-, or $R^KR^LN-$, wherein each of $R^K$ and $R^L$ independently is an unsubstituted$(C_1-C_{20})$hydrocarbyl .

According to some embodiments, the Group IV metal-ligand complex may include a cyclopentadienyl procatalyst according to formula (XIV):

$Lp_iMX_mX'_nX''_p$, or a dimer thereof (XIV).

In formula (XIV), Lp is an anionic, delocalized, $\pi$-bonded group that is bound to M, containing up to 50 non-hydrogen atoms. In some embodiments of formula (XIV), two Lp groups may be joined together forming a bridged structure, and further optionally one Lp may be bound to X.

In formula (XIV), M is a metal of Group 4 of the Periodic Table of the Elements in the +2, +3 or +4 formal oxidation state. X is an optional, divalent substituent of up to 50 non-hydrogen atoms that together with Lp forms a metallocycle with M. X' is an optional neutral ligand having up to 20 non hydrogen atoms; each X" is independently a monovalent, anionic moiety having up to 40 non-hydrogen atoms. Optionally, two X" groups may be covalently bound together forming a

divalent dianionic moiety having both valences bound to M, or, optionally two X" groups may be covalently bound together to form a neutral, conjugated or nonconjugated diene that is π-bonded to M, in which M is in the +2 oxidation state. In other embodiments, one or more X" and one or more X' groups may be bonded together thereby forming a moiety that is both covalently bound to M and coordinated thereto by means of Lewis base functionality Subscript i of Lp, is 0, 1, or 2; subscript n of $X'_n$ is 0, 1, 2, or 3; subscript m of $X_m$ is 0 or 1; and subscript p of $X"_p$ is 0, 1, 2, or 3. The sum of i + m + p is equal to the formula oxidation state of M.

Other procatalysts, especially procatalysts containing other Group IV metal-ligand complexes, will be apparent to those skilled in the art.

The catalyst systems of this disclosure may include co-catalysts or activators in addition to the ionic metallic activator complex having the anion of formula (I) and a countercation Such additional co-catalysts may include, for example, tri(hydrocarbyl)aluminum compounds having from 1 to 10 carbons in each hydrocarbyl group, an oligomeric or polymeric aluminoxane compound, di(hydrocarbyl)(hydrocarbyloxy)aluminums compound having from 1 to 20 carbons in each hydrocarbyl or hydrocarbyloxy group, or mixtures of the foregoing compounds. These aluminum compounds are usefully employed for their beneficial ability to scavenge impurities such as oxygen, water, and aldehydes from the polymerization mixture.

The di(hydrocarbyl)(hydrocarbyloxy)aluminum compounds that may be used in conjunction with the activators described in this disclosure correspond to the formula $T^1_2AlOT^2$ or $T^1_1Al(OT^2)_2$ wherein $T^1$ is a secondary or tertiary $(C_3\text{-}C_6)$alkyl, such as isopropyl, isobutyl or *tert*-butyl; and $T^2$ is a alkyl substituted $(C_6\text{-}C_{30})$aryl radical or aryl substituted $(C_1\text{-}C_{30})$alkyl radical, such as 2,6-di(*tert*-butyl)-4-methylphenyl, 2,6-di(*tert*-butyl)-4-methylphenyl, 2,6-di(*tert*-butyl)-4-methyltolyl, or 4-(3',5 '-di-*tert*-butyltolyl)-2,6-di-*tert*-butylphenyl.

Additional examples of aluminum compounds include $[C_6]$trialkyl aluminum compounds, especially those wherein the alkyl groups are ethyl, propyl, isopropyl, n-butyl, isobutyl, pentyl, neopentyl, or isopentyl, dialkyl(aryloxy) aluminum compounds containing from 1-6 carbons in the alkyl group and from 6 to 18 carbons in the aryl group (especially (3,5-di(t-butyl)-4-methylphenoxy)diisobutylaluminum), methylaluminoxane, modified rnethylaluminoxane and diisobutylaluminoxane.

In the catalyst systems according to embodiments of this disclosure, the molar ratio of the ionic metallic activator complex to Group IV metal-ligand complex may be from 1:10,000 to 1000.1, such as, for example, from 1:5000 to 100:1, from 1:100 to 100:1 from 1:10 to 10:1, from 1 :5 to 1: 1, or from 1.25:1 to 1:1. The catalyst systems may include combinations of one or more ionic metallic activator complexes described in this disclosure.

**Polyolefins**

The catalytic systems described in the preceding paragraphs are utilized in the polymerization of olefins, primarily ethylene and propylene, to form ethylene-based polymers or propylene-based polymers. In some embodiments, there is only a single type of olefin or α-olefin in the polymerization scheme, creating a homopolymer. However, additional α-olefins may be incorporated into the polymerization procedure. The additional α-olefin co-monomers typically have no more than 20 carbon atoms. For example, the α-olefin co-monomers may have 3 to 10 carbon atoms or 3 to 8 carbon atoms. Exemplary α-olefin co-monomers include, but are not limited to, propylene, 1-butene, 1-pentene, 1-hexene, 1-heptene, 1-octene, 1-nonene, 1-decene, and 4-methyl-1-pentene. For example, the one or more α-olefin co-monomers may be selected from the group consisting of propylene, 1-butene, 1-hexene, and 1-octene; or in the alternative, from the group consisting of 1-hexene and 1-octene.

The ethylene-based polymers, for example homopolymers and/or interpolymers (including copolymers) of ethylene and optionally one or more co-monomers such as α-olefins, may comprise from at least 50 mole percent (mol%) monomer units derived from ethylene. All individual values and subranges encompassed by "from at least 50 mole percent" are disclosed herein as separate embodiments, for example, the ethylene-based polymers, homopolymers and/or interpolymers (including copolymers) of ethylene and optionally one or more co-monomers such as α-olefins may comprise at least 60 mole percent monomer units derived from ethylene; at least 70 mole percent monomer units derived from ethylene; at least 80 mole percent monomer units derived from ethylene; or from 50 to 100 mole percent monomer units derived from ethylene; or from 80 to 100 mole percent monomer units derived from ethylene

In some embodiments, the polymerization process according to the present disclosure produces ethylene-based polymers. In one or more embodiments, the ethylene-based polymers may comprise at least 90 mole percent units derived from ethylene. All individual values and subranges from at least 90 mole percent are included herein and disclosed herein as separate embodiments. For example, the ethylene-based polymers may comprise at least 93 mole percent units derived from ethylene; at least 96 mole percent units; at least 97 mole percent units derived from ethylene, or in the alternative, from 90 to 100 mole percent units derived from ethylene, from 90 to 99.5 mole percent units derived from ethylene; or from 97 to 99.5 mole percent units derived from ethylene.

In some embodiments of the ethylene-based polymer, the amount of additional α-olefin is less than 50 mol%; other embodiments include at least 1 mole percent (mol%) to 25 mol%; and in further embodiments the amount of

additional α-olefin includes at least 5 mol% to 103 mol%. In some embodiments, the additional α-olefin is 1-octene.

Any conventional polymerization processes may be employed to produce the ethylene-based polymers. Such conventional polymerization processes include, but are not limited to, solution polymerization processes, gas phase polymerization processes, slurry phase polymerization processes, and combinations thereof using one or more conventional reactors such as loop reactors, isothermal reactors, fluidized bed gas phase reactors, stirred tank reactors, batch reactors in parallel, series, or any combinations thereof, for example.

In one embodiment, the ethylene-based polymer may be produced via solution polymerization in a dual reactor system, for example a dual loop reactor system, wherein ethylene and optionally one or more α-olefins are polymerized in the presence of the catalyst system, as described herein, and optionally one or more co-catalysts. In another embodiment, the ethylene-based polymer may be produced via solution polymerization in a dual reactor system, for example a dual loop reactor system, wherein ethylene and optionally one or more α-olefins are polymerized in the presence of the catalyst system in this disclosure, and as described herein, and optionally one or more other catalysts. The catalyst system, as described herein, can be used in the first reactor, or second reactor, optionally in combination with one or more other catalysts. In one embodiment, the ethylene-based polymer may be produced via solution polymerization in a dual reactor system, for example a dual loop reactor system, wherein ethylene and optionally one or more α-olefins are polymerized in the presence of the catalyst system, as described herein, in both reactors.

In another embodiment, the ethylene-based polymer may be produced via solution polymerization in a single reactor system, for example a single loop reactor system, in which ethylene and optionally one or more u-olefins are polymerized in the presence of the catalyst system, as described within this disclosure, and optionally one or more co-catalysts, as described in the preceding paragraphs

**[0080]** The ethylene-based polymers may further comprise one or more additives. Such additives include, but are not limited to, antistatic agents, color enhancers, dyes, lubricants, pigments, primary antioxidants, secondary antioxidants, processing aids, UV stabilizers, and combinations thereof. The ethylene-based polymers may contain any amounts of additives. The ethylene-based polymers may compromise from about 0 to about 10 percent by the combined weight of such additives, based on the weight of the ethylene-based polymers and the one or more additives. The ethylene-based polymers may further comprise fillers, which may include, but are not limited to, organic or inorganic fillers. The ethylene-based polymers may contain from about 0 to about 20 weight percent fillers such as, for example, calcium carbonate, talc, or $Mg(OH)_2$, based on the combined weight of the ethylene-based polymers and all additives or fillers The ethylene-based polymers may further be blended with one or more polymers to form a blend.

In some embodiments, a polymerization process for producing an ethylene-based polymer may include polymerizing ethylene and at least one additional α-olefin in the presence of a catalyst system according to the present disclosure. The polymer resulting from such a catalyst system that incorporates the metal-ligand complex of formula (X) may have a density according to ASTM D792 (incorporated herein by reference in its entirety) from 0.850 g/cm$^3$ to 0.950 g/cm$^3$, from 0.880 g/cm$^3$ to 0.920 g/cm$^3$, from 0.880 g/cm$^3$ to 0.910 g/cm$^3$, or from 0.880 g/cm$^3$ to 0.900 g/cm$^3$, for example.

In another embodiment, the polymer resulting from the catalyst system according to the present disclosure has a melt flow ratio ($I_{10}/I_2$) from 5 to 15, where the melt index, $I_2$, is measured according to ASTM D1238 (incorporated herein by reference in its entirety) at 190 °C and 2.16 kg load and melt index $I_{10}$ is measured according to ASTM D1238 at 190 °C and 10 kg load. In other embodiments the melt flow ratio ($I_{10}/I_2$) is from 5 to 10, and in others, the melt flow ratio is from 5 to 9.

In some embodiments, the polymer resulting from the catalyst system according to the present disclosure has a molecular-weight distribution (MWD) from 1 to 25, where MWD is defined as $M_w/M_n$ with $M_w$ being a weight-average molecular weight and $M_n$ being a number-average molecular weight. In other embodiments, the polymers resulting from the catalyst system have a MWD from 1 to 6. Another embodiment includes a MWD from 1 to 3; and other embodiments include MWD from 1.5 to 2.5.

Embodiments of the catalyst systems described in this disclosure yield unique polymer properties as a result of the high molecular weights of the polymers formed and the amount of the co-monomers incorporated into the polymers.

**Procedure for Continuous Process Reactor Polymerization:** Raw materials (ethylene, 1-octene) and the process solvent (a narrow boiling range high-purity isoparaffinic solvent trademarked ISOPAR E commercially available from ExxonMobil Corporation) are purified with molecular sieves before introduction into the reaction environment. Hydrogen is supplied in pressurized cylinders as a high purity grade and is not further purified. The reactor monomer feed (ethylene) stream is pressurized to above reaction pressure. The solvent and comonomer feed is pressurized to above reaction pressure. The individual catalyst components (metal-ligand complexes and cocatalysts) are manually batch diluted to specified component concentrations with purified solvent and pressured to above reaction pressure. All reaction feed flows are measured with mass flow meters and independently controlled with computer automated valve control systems.

The continuous solution polymerizations are carried out in a continuously circulated loop-reactor. The combined solvent, monomer, comonomer and hydrogen feed to the reactor is temperature controlled between 5° C and 50° C and is typically 15-25° C. All of the components are fed to the polymerization reactor with the solvent feed. The catalyst is fed to the reactor to reach a specified conversion of ethylene. The cocatalyst component(s) is/are fed separately based on a

calculated specified molar ratios or ppm amounts. The effluent from the polymerization reactor (containing solvent, monomer, comonomer, hydrogen, catalyst components, and polymer) exits the reactor and is contacted with water. In addition, various additives such as antioxidants, can be added at this point. The stream then goes through a static mixer to evenly disperse the mixture.

Following additive addition, the effluent (containing solvent, monomer, comonomer, hydrogen, catalyst components, and molten polymer) passes through a heat exchanger to raise the stream temperature to approximately 250 °C in preparation for separation of the polymer from the other lower-boiling components. The polymer stream remains in the heat exchanger segment for approximately 2 minutes. The stream then passes through the reactor pressure control valve, across which the pressure is greatly reduced. From there, it enters a separation system consisting of a two devolatizers in series followed by a vacuum extruder. In this section, solvent and unreacted hydrogen, monomer, comonomer, and water are removed from the polymer. The residence time in this section is at least 1 hour per devolatizer section. The first devolatizer was kept at roughly 180 °C and the second devolatizer was kept at approximately 230 °C. At the exit of the extruder, the strand of molten polymer formed goes through a cold-water bath, where it solidifies. The strand is then fed through a strand chopper, where the polymer is cut it into pellets and is then air-dried.

**Procedure for Batch Reactor Polymerization.** Raw materials (ethylene, 1-octene) and the process solvent (ISOPAR E) are purified with molecular sieves before introduction into the reaction environment. A stirred autoclave reactor was charged with ISOPAR E, and 1-octene. The reactor was then heated to a temperature and charged with ethylene to reach a pressure. Optionally, hydrogen was also added. The catalyst system was prepared in a drybox under inert atmosphere by mixing the metal-ligand complex and optionally one or more additives, with additional solvent. The catalyst system was then injected into the reactor. The reactor pressure and temperature were kept constant by feeding ethylene during the polymerization and cooling the reactor as needed. After 10 minutes, the ethylene feed was shut off and the solution transferred into a nitrogen-purged resin kettle. The polymer was thoroughly dried in a vacuum oven, and the reactor was thoroughly rinsed with hot ISOPAR E between polymerization runs.

Unless otherwise indicated herein, the following analytical methods are used in describing aspects of the present disclosure:

**Melt index**

Melt indices $I_2$ (or I2) and $I_{10}$ (or I10) of polymer samples were measured in accordance to ASTM D-1238 (method B) at 190 °C and at 2.16 kg and 10 kg load, respectively. Their values are reported in g/10 min.

**Density**

Samples for density measurement were prepared according to ASTM D4703. Measurements were made, according to ASTM D792, Method B, within one hour of sample pressing.

**Gel Permeation Chromatography (GPC)**

The chromatographic system consisted of a PolymerChar GPC-IR (Valencia. Spain) high temperature GPC chromatograph equipped with an internal IR5 infra-red detector (IR5) The autosampler oven compartment was set at 160° Celsius and the column compartment was set at 150° Celsius. The columns used were 4 Agilent "Mixed A" 30cm 20-micron linear mixed-bed columns and a 20-um pre-column. The chromatographic solvent used was 1,2,4 trichlorobenzene and contained 200 ppm of butylated hydroxytoluene (BHT). The solvent source was nitrogen sparged. The injection volume used was 200 microliters and the flow rate was 1.0 milliliters/minute.

Calibration of the GPC column set was performed with 21 narrow molecular weight distribution polystyrene standards with molecular weights ranging from 580 to 8,400,000 and were arranged in 6 "cocktail" mixtures with at least a decade of separation between individual molecular weights. The standards were purchased from Agilent Technologies. The polystyrene standards were prepared at 0.025 grams in 50 milliliters of solvent for molecular weights equal to or greater than 1,000,000, and 0.05 grams in 50 milliliters of solvent for molecular weights less than 1,000,000. The polystyrene standards were dissolved at 80 degrees Celsius with gentle agitation for 30 minutes. The polystyrene standard peak molecular weights were converted to polyethylene molecular weights using Equation 1 (as described in Williams and Ward, J. Polym. Sci., Polym. Let., 6, 621 (1968)).:

$$M_polyethylene = A \times (M_polystyrene)^\wedge B \qquad \text{(EQ 1)}$$

where M is the molecular weight, A has a value of 0.4315 and B is equal to 1.0.

A fifth order polynomial was used to fit the respective polyethylene-equivalent calibration points. A small

adjustment to A (from approximately 0.375 to 0.445) was made to correct for column resolution and band-broadening effects such that linear homopolymer polyethylene standard is obtained at 120,000 Mw.

The total plate count of the GPC column set was performed with decane (prepared at 0.04 g in 50 milliliters of TCB and dissolved for 20 minutes with gentle agitation.) The plate count (Equation 2) and symmetry (Equation 3) were measured on a 200 microliter injection according to the following equations:

$$Plate\ Count = 5.54 * (((\mathrm{RV_(Peak\ Max)})/(Peak\ Width\ at\ 1/2\ height))\text{^}2 \qquad \text{(EQ 2)}$$

where RV is the retention volume in milliliters, the peak width is in milliliters, the peak max is the maximum height of the peak, and ½ height is ½ height of the peak maximum.

$$Symmetry = \frac{(Rear\ Peak\ [\![RV]\!]\ _(one\ tenth\ height) - [\![RV]\!]\ _(Peak\ max))}{(RV_{Peak\ max} - Front\ Peak\ RV_{one\ tenth\ height})} \qquad \text{(EQ 3)}$$

where RV is the retention volume in milliliters and the peak width is in milliliters, Peak max is the maximum position of the peak, one tenth height is 1/10 height of the peak maximum, and where rear peak refers to the peak tail at later retention volumes than the peak max and where front peak refers to the peak front at earlier retention volumes than the peak max. The plate count for the chromatographic system should be greater than 18,000 and symmetry should be between 0.98 and 1.22.

Samples were prepared in a semi-automatic manner with the PolymerChar "Instrument Control" Software, wherein the samples were weight-targeted at 2 mg/ml, and the solvent (contained 200ppm BHT) was added to a pre nitrogen-sparged septa-capped vial, via the PolymerChar high temperature autosampler. The samples were dissolved for 2 hours at 160° Celsius under "low speed" shaking.

The calculations of $Mn_{(GPC)}$, $Mw_{(GPC)}$, and $Mz_{(GPC)}$ were based on GPC results using the internal IR5 detector (measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1.

$$Mn_{(GPC)} = \frac{\sum^{i} IR_i}{\sum^{i} \left( IR_i / M_{polyethylene_i} \right)} \qquad \text{(EQ 4)}$$

$$Mw_{(GPC)} = \frac{\sum^{i} \left( IR_i * M_{polyethylene_i} \right)}{\sum^{i} IR_i} \qquad \text{(EQ 5)}$$

$$Mz_{(GPC)} = \frac{\sum^{i} \left( IR_i * M_{polyethylene_i}^{\ 2} \right)}{\sum^{i} \left( IR_i * M_{polyethylene_i} \right)} \qquad \text{(EQ 6)}$$

In order to monitor the deviations over time, a flowrate marker (decane) was introduced into each sample via a micropump controlled with the PolymerChar GPC-IR system. This flowrate marker (FM) was used to linearly correct the pump flowrate (Flowrate(nominal)) for each sample by RV alignment of the respective decane peak within the sample

(RV(FM Sample)) to that of the decane peak within the narrow standards calibration (RV(FM Calibrated)). Any changes in the time of the decane marker peak are then assumed to be related to a linear-shift in flowrate (Flowrate(effective)) for the entire run. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flowrate (with respect to the narrow standards calibration) is calculated as Equation 7. Processing of the flow marker peak was done via the PolymerChar GPCOne™ Software. Acceptable flowrate correction is such that the effective flowrate should be within +/-0.5% of the nominal flowrate.

$$\text{Flowrate(effective)} = \text{Flowrate(nominal)} * (\text{RV(FM Calibrated)} / \text{RV(FM Sample)}) \qquad \text{(EQ 7)}$$

Short chain branching per 1000 total carbon (SCB/1000C) is measured according to method described in the "Molecular Weighted Comonomer Distribution Index (MWCDI)" section of WO2015200743A1.

Plaque Preparation for Electrical Testing

For all samples, the resin is added to a 420 mL Brabender mixer bowl with cam blades set at 80 °C and fluxed for 1 minute once melted. If the sample includes a partition agent, it is added to the resin and fluxed until the powder was visually incorporated. The antioxidant is added slowly, and the blend is fluxed for 3 minutes once melted. Perkadox BC-FF is melted in a sealed vial using a hot water bath set at 60 °C and the liquid peroxide is added and mix at 40 rpm for 3 minutes. The polymer melt temperature should not exceed 125 °C. The mixture is removed from the mixing bowl and cold pressed into a 'pancake'.

For plaque preparation, the samples are first pressed at 120 °C for 3 minutes under low pressure (500 psi). Following the 3 minutes, the compression is switched to high pressure (2500 psi) at the same temperature for another 3 minutes. The samples are cut into even pieces and reloaded back into the press. Then the samples are pressed at 120 °C at low pressure for 3 minutes. Then, the temperature was raised to 182 °C and the pressure increased to high pressure conditions. Once the press reached the desired temperature, the samples are cured for further 12 minutes at high pressure. Following the cure time, samples are cooled to about 30 °C under high pressure.

A 50 mil and 20 mil plaque are made from the cold pressing using the plaque preparation and curing method above. The plaques are then placed in a vacuum oven and degassed for 3 days at 65 °C under house vacuum. Then sample discs are punched out to be tested for DC/DF and VR. Replicate samples are punched from the same plaque.

**Polymeric Electrical Properties**

The electrical insulating efficiency of a medium, such as a polymer material, may be assessed in view of the electrical resistance of the medium and the electrical loss of the medium. Electrical loss lowers the efficiency by which the insulating medium electrically insulates in the presence of an electric field. The resistance of the insulating medium should be as high as possible for both alternating current (AC) and direct current (DC) systems, because the resistance is inversely related to the power or electric loss.

In a DC system such as a photovoltaic device encapsulated in an insulating medium such as polymer material, electric loss manifests as the leakage of current from the encapsulated device through the encapsulant to the external environment. This current (I) is directly related to the voltage (V) of the insulating medium and inversely related to the resistance (R) of the insulating medium according to the equation $I = V \times R^{-1}$. Therefore, the higher the resistance, the lower the current and the current leakage.

In an AC system including an insulating medium such as cable insulation, electric loss manifests as the absorption of energy by the insulating medium in the presence of an electrical field. Measured in power (P), this loss is determined by the equation $P = V^2 \times \omega \times C \times \varepsilon' \times \tan\delta$ where $\omega$ is the angular frequency, $\varepsilon'$ is the relative permittivity, C is the capacitance, and $\tan\delta$ is the dissipation factor, $\tan\delta = (C \times R \times \omega)^{-1}$, resulting in the equation $P = V^2 \times \varepsilon' \times R^{-1}$. Since the resistance is inversely related to the power loss, the higher the resistance, the lower the power loss.

The electrical resistance of a medium is generally decreased as a result of ionic diffusion caused by an external electric field. In a system in which ionic diffusion dominates the electrical response, the resistance is related to the diffusing ions according to the equation $R = 6 \times \pi \times \varepsilon' \times \varepsilon_0 \times \eta \times r \times C^{-1} \times q^{-2} \times N^{-1}$ where $\varepsilon_0$ is the permittivity of vacuum ($8.854 \times 10^{-12}\ F\cdot m^{-1}$), $\eta$ is the dynamic viscosity of the medium, r is the hydrodynamic radius of the ion, q is the charge of the ion, and N is the concentration of the ion. Since increased resistance decreases energy loss and a decrease in ion concentration increases resistance, a reduction in the concentration of ions diffusing through the medium decreases energy loss

An ability of an ion to diffuse through a given medium is influenced by the size of the ion, the charge of the ion, the interaction of the ion with the surrounding medium, and the ion's dissociation energy with available counterions. Since not

all ions diffuse equally through the given medium, when the medium is a polymer, the diffusivity of the ions generally affects the insulation ability of the polymer. Without intending to be bound by theory, it is believed that produced polymers of the catalyst systems of this disclosure have desirable electrical properties such as decreased electrical loss, because the anions of the ionic bimetallic activator complex of formula (I) are less able to diffuse through the produced polymer.

The presence of the $[B(C_6F_5)_4]^-$ Borate is known to negatively impact the electrical insulating properties of polymers. Polymers made using activators based on the $[B(C_6F_5)_4]^-$ anion often retain the anion following polymerization. The thermal stability of this anion allows it to survive high temperature like those commonly found during post-polymerization processing like those experienced prior to devolatilization in solution polymerization assets or those experienced in extruders or other activities downstream of the polymerization activity.

Scheme 1. Thermal decomposition of ammonium borates

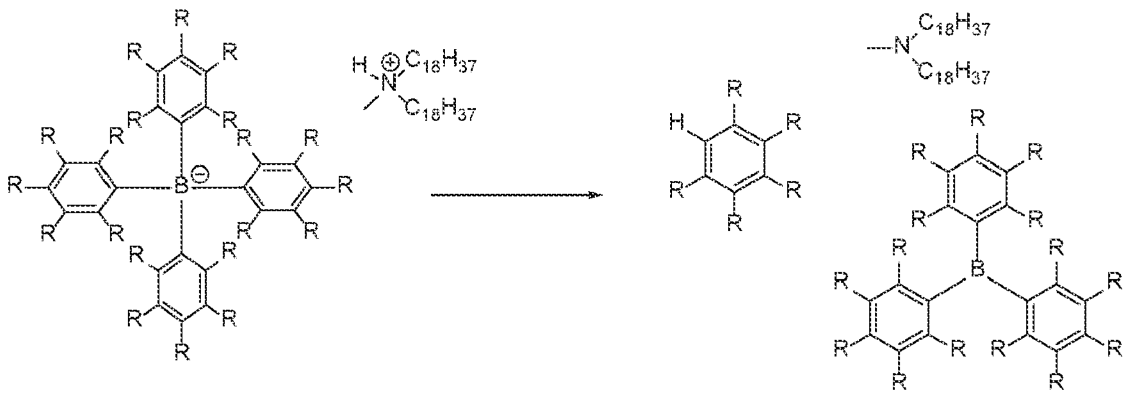

The relative thermal stability of a series of anions can be assessed by comparing a series using a common cationic component. For example, by not meant to be constrained by, an ammonium cation can be used. In this example, the thermal decomposition of borate anions is believed to proceed by protonation of an aromatic substituent by the ammonium cation. This produces a triarylborane, an aromatic hydrocarbon and the neutral amine. Depending on the volatility of these species and the temperature at which a thermal decomposition experiment is conducted, one or more of these species may be volatile, resulting in a observed loss of mass from the sample.

Theoretical percent decomposition of each borate species can be determined by evaluation of the starting structures and what volatile components one expects to be present upon decomposition. From these numbers, one can assign the expected mass loss at 100% decomposition and subsequently compare that value to the observed mass loss. This general approach is described in equation 1.

$$Percent\ Decomposition = \frac{(m_0 - m_t)}{(m_0 \times wf)} \times 100 \qquad (1)$$

Where in $m_0$ is the initial mass of the sample, $m_t$ is the mass of the sample at time t, and wf in the molecular weight of the expected volatile fragments divided by the molecular weight of the parent compound. For the purpose of the calculation of Equation (1), the amine is considered to be the only non-volatile component following decomposition.

One or more features of the present disclosure are illustrated in view of the examples as follows:

## EXAMPLES

Example 1 includes synthetic procedures for intermediates and for isolated activator.

*Example 1 - Representative Procedure for Synthesis of Sodium Borate Salts-Synthesis A*

In a glove box, magnesium turnings were suspended in diethyl ether and activated by addition of 2 drops of dibromoethane. A bromofluorobenzene compound was slowly added as a 33 wt % solution in diethyl ether. The solution was stirred for 4-6 hours and then was quenched by addition of solid sodium tetrafluoroborate. The quenched solution was stirred for 24h. The solution was removed from the glovebox and poured into a saturated solution of sodium bicarbonate and stirred for 30 min. The mixture was filtered through celite. The organic solution was isolated and the aqueous solution was extracted with diethyl ether. The combined organic fractions were dried over anhydrous sodium sulfate. The solution was filtered and then concentrated using a rotary evaporator. The resulting residue was re-dissolved in dichloromethane

and concentrated using a rotary evaporator. The residue was triturated using dichloromethane yielding an off-white solid and a pale yellow to brown solution. The solid was isolated by filtration, rinsing with additional dichloromethane. The solid was dried under vacuum to yield the desired product.

*Representative Procedure for Synthesis of Sodium Borate Salts-Synthesis B*

In a glove box, the desired bromofluorobenzene compound was dissolved in diethyl ether. Isopropyl magnesium chloride in diethyl ether (2M) was then added dropwise. The solution was stirred for 4-6 hours at which point the reaction was quenched by addition of solid sodium tetrafluoroborate. The quenched solution was stirred for 18-24 hours. The solution was removed from the glovebox and poured into a saturated solution of sodium bicarbonate and stirred for 30 min. The organic solution was isolated and the aqueous solution was extracted with diethyl ether. The combined organic fractions were dried over anhydrous sodium sulfate. The solution was filtered and then concentrated using a rotary evaporator. The resulting residue was re-dissolved in dichloromethane and concentrated using a rotary evaporator. The residue was triturated using dichloromethane yielding a white solid and a yellow solution. The solid was isolated by filtration rinsing with additional dichloromethane. The solid was dried under vacuum to yield the desired material.

*Representative Procedure for Cation Exchange to form Armeenium Borate Salts*

Under an inert atmosphere, Armeen HCl and the sodium borate salt were added together in dry, degassed toluene at a 1:1 molar ratio. The suspension was stirred overnight, filtered, and concentrated under vacuum at 50°C to yield the desired product.

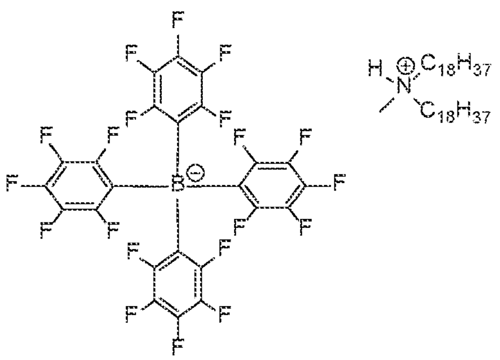

Comparative C1 (Comp. C1)

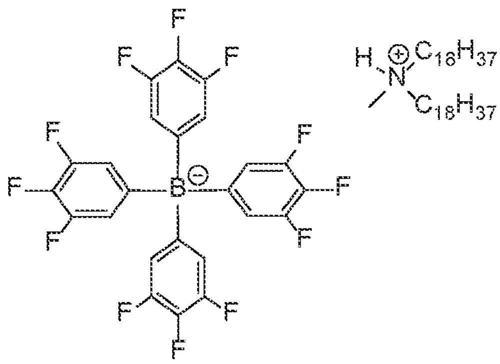

Activator A

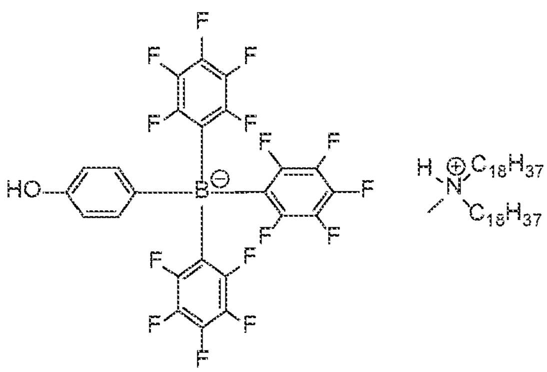

Activator B

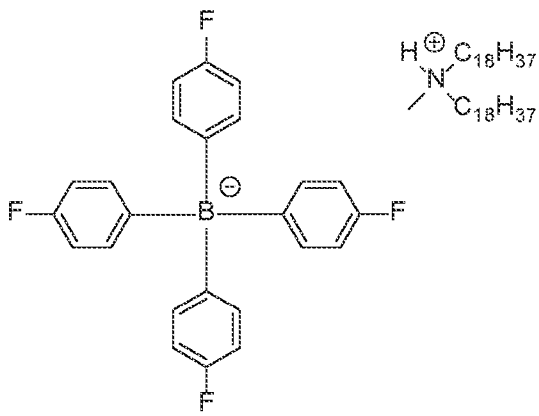

Activator C

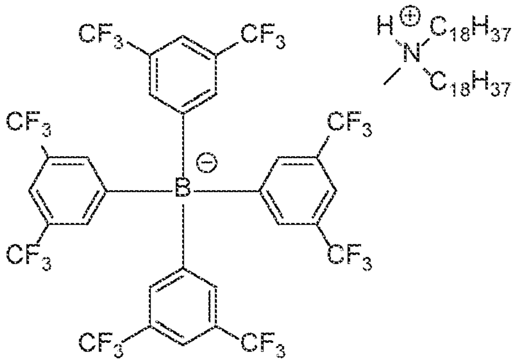

Activator D

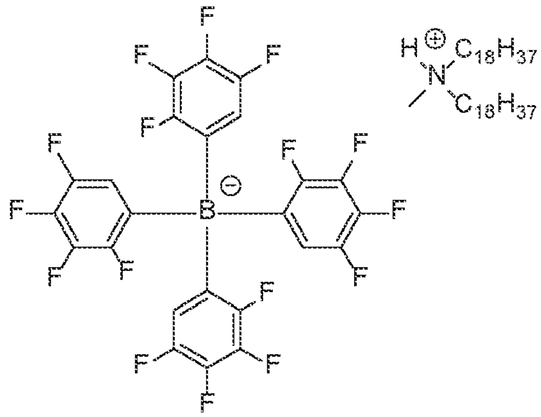

Activator E

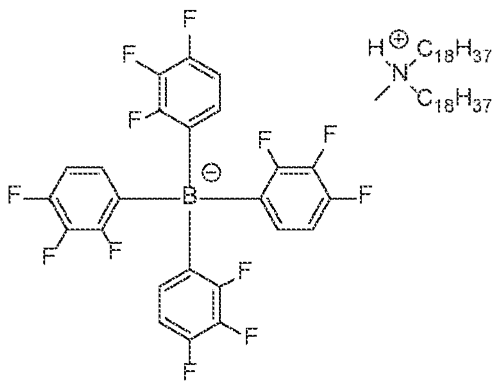

Activator F

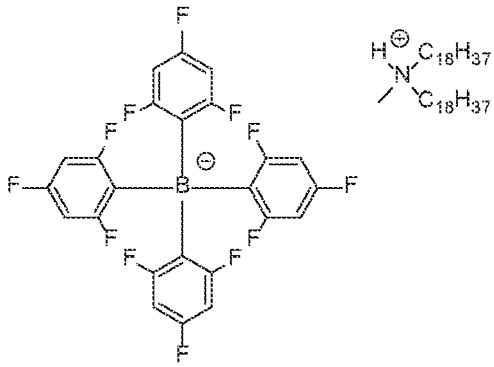

Activator G

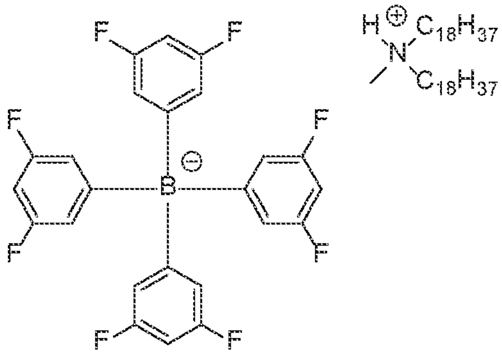

Activator H

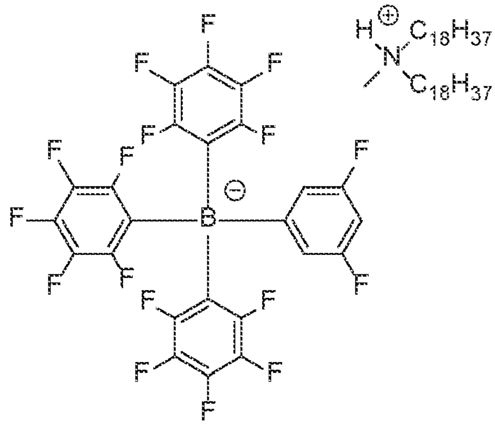

Activator I

Table 1 tabulates the theoretical decomposition of Comparative C1, and Compound A to Compound I.

**Table 1: Calculated Percent Decomposition after 30 Minutes based on Mass of Volatile Fragments**

| Compound | Parent Compound MW (g/mol) | Volatile Components | MW of Combined Volatile Fragments (g/mol) | TGA weight loss after 30 minutes | | | Calculated percent decomposition after 30 minutes based on mass of volatile fragments | | |
|---|---|---|---|---|---|---|---|---|---|
| | | | | 210 °C | 250 °C | 260 °C | 210°C | 250 °C | 260 °C |
| Comp. C1 | 1216.1 | Aromatic + Borane | 680.0 | 0.72% | 2.20% | 3.61% | 1.29% | 3.93% | 6.46% |
| A | 1072.2 | Aromatic + Borane | 536.1 | 10.7% | 26.0% | 30.5% | 21.4% | 52.0% | 61.0% |
| B | 1142.1 | Aromatic + Borane | 606.1 | 26.6% | 40.1% | 43.7% | 50.1% | 75.6% | 82.4% |
| C | 928.2 | Aromatic + Borane | 392.2 | 27.9% | 39.8% | 43.0% | 66.0% | 94.2% | 101.8% |
| D | 1400.3 | Aromatic + Borane | 864.2 | 10.6% | 38.0% | 42.1% | 17.2% | 61.6% | 68.1% |
| E | 1144.1 | Aromatic + Borane | 608.1 | 1.45% | 17.5% | 25.8% | 2.73% | 32.9% | 48.5% |
| F | 1072.2 | Aromatic + Borane | 536.1 | 11.1% | 23.5% | 32.4% | 22.2% | 47.0% | 64.8% |
| G | 1072.2 | Aromatic + Borane | 536.1 | 4.74% | 31.5% | 44.7% | 9.48% | 63.0% | 89.4% |
| H | 1000.2 | Aromatic + Borane | 464.2 | 12.5% | 33.8% | 37.4% | 26.9% | 72.8% | 80.6% |
| 1 | 1162.1 | Aromatic + Borane | 625.1 | 8.61% | 20.5% | 27.3% | 16.0% | 38.1% | 50.8% |

FIG. 1 is a Thermogravimetric analysis (TGA) isothermal plot for activator Compound A and B and Comparative Compound C1 of the percent loss as a function of time at 250 °C. Compounds A and B are representative of Compounds A to I in that each compound has a greater than 10 percent weight lost, which is identified in TGA isothermal plot of FIG. 1 and tabulated in Table 1. For Compound B, the weight loss is greater than 40% at 30 minutes

FIG. 2 is a TGA isothermal plot for activator Compound A and B and Comparative Compound C1 of the percent loss as a function of time at 260 °C. Similar to FIG. 1, Compounds A and B are representative of Compounds A to I in FIG. 2. For Compound B, the weight loss is greater than 43% at 30 minutes.

FIG. 3 is a TGA isothermal plot for activator Compound A and B and Comparative Compound C1 of the percent loss as a function of time at 210 °C. Similar to FIG. 1, Compounds A and B are representative of Compounds A to 1 in FIG. 3. For Compound B, the weight loss is greater than 26% at 30 minutes.

Ethylene-co-1-octene Polymerization Experiments

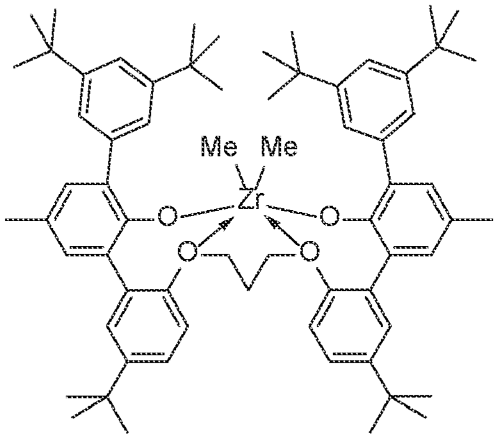

Cat. 1

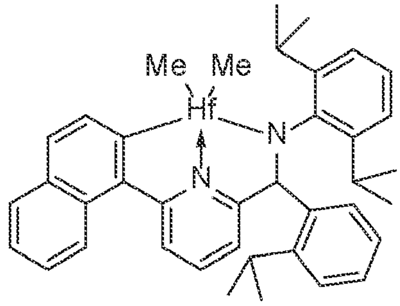

Cat. 2

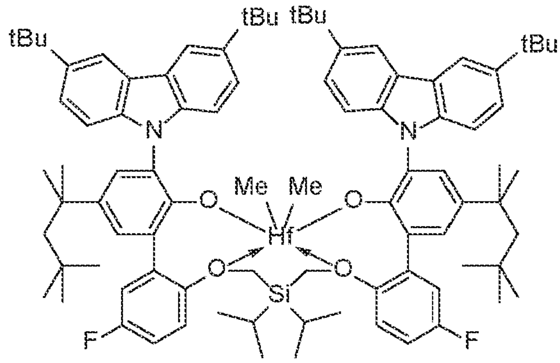

Cat. 3

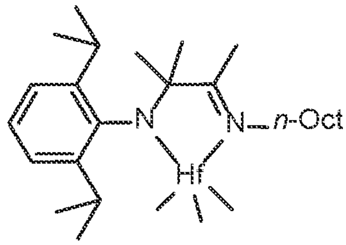

Cat. 4

Comparative C2 (Comp. (2) is an aluminoxane modified with *n*-octyl substituents such that the methyl:*n*-octyl ratio is approximately 6:1 and contains approximately 15 mol % Al as $AlR_3$ species. Comparative C3 (Comp. C3) is an aluminoxane modified with *iso*-butyl substituents such that the methyl:*i*-butyl ratio is approximately 2:1 and contains approximately 40 mol % Al as $AlR_3$ species.

**Table 2. Batch ethylene-co-1-octene polymerization experiments using selected activators.**

| entry | procatalyst (μmol) | activator | ratio | Temp (°C) | Isopar E, (g) | ethylene (psi) | 1-octene, (g) | yield, (g) | Mn | Mw (g/mol) | PDI | Tm (°C) |
|---|---|---|---|---|---|---|---|---|---|---|---|---|
| 1 | Cat. 1 (0.15) | Comp. C1 | 1.2 | 160 | 1283 | 325 | 60 | 27.6 | 82325 | 206139 | 2.5 | 126.3 |
| 2 | Cat. 1 (0.14) | Comp. C3 | 100 | 160 | 1284 | 326 | 61 | 20.4 | 51659 | 227501 | 4.4 | 122.1 |
| 3 | Cat. 1 (0.18) | A | 1.2 | 160 | 1277 | 327 | 60 | 35 | 75962 | 203226 | 2.7 | 127.0 |
| 4 | Cat. 2 (1.9) | Comp. C1 | 1.2 | 120 | 1283 | 325 | 60 | 38.5 | 65734 | 566172 | 8.6 | 115.8 |
| 5 | Cat. 2 (5.0) | Comp. C3 | 100 | 120 | 1282 | 326 | 61 | 0 | - | - | - | - |
| 6 | Cat. 2 (1.5) | A | 1.2 | 120 | 1280 | 324 | 60 | 41.5 | 64006 | 565853 | 8.8 | 118.0 |
| 7 | Cat. 3 (0.28) | Comp. C1 | 1.2 | 159 | 1280 | 326 | 60 | 38.3 | 91982 | 532064 | 5.8 | 94.1 |
| 8 | Cat. 3 (6) | Comp. C3 | 100 | 160 | 1285 | 331 | 60 | 0 | - | - | - | - |
| 9 | Cat. 3 (0.9) | A | 1.2 | 160 | 1276 | 326 | 60 | 43.9 | 116412 | 541420 | 4.7 | 86.3 |

(continued)

| entry | procatalyst (μmol) | activator | ratio | Temp (°C) | Isopar E, (g) | ethylene (psi) | 1-octene, (g) | yield, (g) | Mn | Mw (g/mol) | PDI | Tm (°C) |
|---|---|---|---|---|---|---|---|---|---|---|---|---|
| 10 | Cat. 4 (2.0) | Comp. C1 | 1.2 | 120 | 1401 | 101 | 75 | 25.4 | 49292 | 155520 | 3.2 | 67.6 |
| 11 | Cat. 4 (7.5) | Comp. C2 | 100 | 120 | 1403 | 100 | 75 | 0 | - | - | - | - |
| 12 | Cat. 4 (2.0) | A | 1.2 | 120 | 1399 | 102 | 75 | 22.8 | 55908 | 174696 | 3.1 | 69.6 |

* Runs using Comp. C1 and A activators were conducted using Comp. C3 as a scavenger in a 50:1 Al:M ratio, where M is the molar amount of metal associated with the pro-catalysts.

Table 3. Continuous ethylene-co-1-octene polymerization using selected activators[A]

| entry | activator | eff.[B] | % solids[C] | $H_2$ mol %[D] | $C_2$ conversion, % | $I_2$ g/10min | $I_{10}/I_2$ | density, g/cc | conductivity aS/cm |
|---|---|---|---|---|---|---|---|---|---|
| 1 | Comp C1 | 18.7 | 28.0 | 0.26 | 88.2 | 5.0 | 6.8 | 0.871 | 1979 |
| 2 | A | 10.2 | 28.5 | 0.26 | 87.7 | 4.7 | 7.1 | 0.872 | 760 |

[A] Polymerizations were conducted using procatalyst Cat. 1 at a reactor temperature of 165 °C, feed flows of 240 lbs/h of ethylene, 83 lbs/h of 1-octene, 525 lbs/h ISOPAR E. Activators were added at a 1.2 ratio relative to the procatalyst. Comp. C2 was added at a 10: 1 Al:Zr ratio. [B]The efficiency (eff.) is measured as $10^6$ g polymer /g metal in the catalyst component). Ethylene conversion is measured as the difference between the ethylene fed to the reactor relative to the amount exiting the reactor, expressed as a percentage. [C]% Solids is the concentration of polymer in the reactor [D]$H_2$ (mol%) is defined as the mole fraction of hydrogen, relative to ethylene, fed into the reactor.

All manipulations of air-sensitive materials were performed with rigorous exclusion of $O_2$ and moisture in oven-dried Schlenk-type glassware on a dual manifold Schlenk line, interfaced to a high-vacuum line ($10^{-6}$ Torr), or in a $N_2$-filled MBraun glove box with a high-capacity recirculator (less than 1 ppm $O_2$). Argon (Airgas, pre-purified grade) was purified by passage through a supported MnO oxygen-removal column and an activated Davison 4Å molecular sieve column. Ethylene (Airgas) was purified by passage through an oxygen/moisture trap (Matheson, model MTRP-0042-XX). Hydrocarbon solvents (n-pentane, n-hexane, 1-hexene, methylcyclohexane, and toluene) were dried using activated alumina columns according to the method described by Grubbs (*see* Pangborn, A. B.; Giardello, M. A.; Grubbs, R. H.; Rosen, R. K.; Timmers, F. J., Safe and Convenient Procedure for Solvent Purification Organometallics 1996, 15 (5), 1518-1520.) and were then vacuum-transferred from Na/K alloy. Benzene-*d6* and toluene-*d8* (Cambridge Isotope Laboratories, 99+ atom %D) were stored over Na/K alloy in vacuum and vacuum-transferred immediately prior to use. 1,2-Difluorobenzene and chlorobenzene-d5 were dried with $CaH_2$, distilled under vacuum. Chloroform-*d*3 and 1,1,2,2-tetrachloroethane-*d*2 were used as received (Cambridge Isotope Laboratories, 99+ atom % D).

**Equipment Standards**

All solvents and reagents are obtained from commercial sources and used as received unless otherwise noted. Anhydrous toluene, hexanes, tetrahydrofuran, and diethyl ether are purified *via* passage through activated alumina and, in some cases, Q-5 reactant. Solvents used for experiments performed in a nitrogen-filled glovebox are further dried by storage over activated 4Å molecular sieves. Glassware for moisture-sensitive reactions is dried in an oven overnight prior to use. NMR spectra are recorded on Varian 400-MR and VNMRS-500 spectrometers. LC-MS analyses are performed using a Waters e2695 Separations Module coupled with a Waters 2424 ELS detector, a Waters 2998 PDA detector, and a Waters 3100 ESI mass detector. LC-MS separations are performed on an XBridge C18 3.5 μm 2.1x50 mm column using a 5:95 to 100:0 acetonitrile to water gradient with 0.1% formic acid as the ionizing agent. HRMS analyses are performed using an Agilent 1290 Infinity LC with a Zorbax Eclipse Plus C18 1.8μm 2.1x50 mm column coupled with an Agilent 6230 TOP Mass Spectrometer with electrospray ionization. $^1$H NMR data are reported as follows: chemical shift (multiplicity (br = broad, s = singlet, d = doublet, t = triplet, q = quartet, p = pentet, sex = sextet, sept ::: septet and m ::: multiplet), integration, and assignment). Chemical shifts for $^1$H NMR data are reported in ppm downfield from internal tetramethylsilane (TMS, δ scale) using residual protons in the deuterated solvent as references. $^{13}$C NMR data are determined with $^1$H decoupling, and the chemical shifts are reported downfield from tetramethylsilane (TMS, δ scale) in ppm versus the using residual carbons in the deuterated solvent as references.

The present invention can be described as set out in the following numbered clauses:

1. A polymerization process comprising contacting ethylene and optionally one or more α-olefin monomers in a solution polymerization reactor in the presence of a catalyst system at a temperature of 120°C to 200°C, wherein the catalyst system comprises a procatalyst and an activator, wherein the activator comprises a anion and a cation, the anion having a structure according to formula (I):

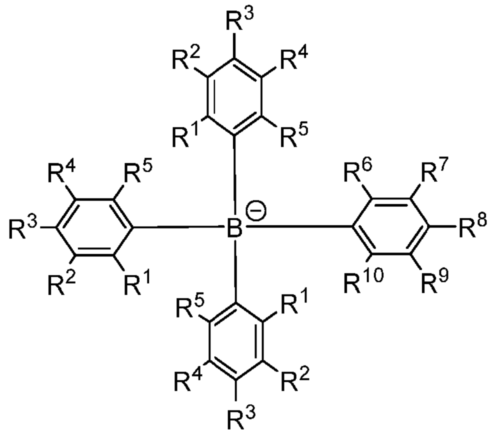

(I)

where:

B is boron atom;
each $R^1$ and each $R^5$ is selected from -H or fluorine atom;
each $R^2$, $R^3$, and $R^4$ is selected from -H, fluorine atom, $(C_1\text{-}C_{40})$hydrocarbyl, $(C_1\text{-}C_{40})$heterohydrocarbyl, wherein at least three of $R^1$, $R^2$, $R^3$, $R^4$, and $R^5$ on each individual ring are fluorine atoms;
$R^6$, $R^7$, $R^8$, $R^9$, and $R^{10}$ are independently selected from -H, fluorine atom, $(C_1\text{-}C_{40})$hydrocarbyl, $(C_1\text{-}C_{40})$heterohydrocarbyl, $-OR^C$, $-SiR^C_3$, wherein $R^C$ is $(C_1\text{-}C_{20})$hydrocarbyl or -H, and optionally $R^7$ and $R^8$ are connected to form a ring;
wherein:
the structure according to formula (I) has a fluorine to carbon ratio (F/C) of less than or equal to 0.83, wherein F is the total number of fluorine atoms in the structure according to formula (I) and C is the total number of carbon atoms in the structure according to formula (I).

2. The process of clause 1, wherein anion of formula (I) has a thermal percent decomposition of greater than 10% as measured by Thermal Gravimetric Analysis.

3. The process of clause 1 or clause 2, wherein when three or more of $R^6$, $R^7$, $R^8$, $R^9$, and $R^{10}$ are fluorine atoms, at least one of $R^1$, $R^2$, $R^3$, $R^4$, and $R^5$ of each individual ring is a -H.

4. The process of clause 1 or clause 2, wherein when none of $R^6$, $R^7$, $R^8$, $R^9$, and $R^{10}$ are fluorine atoms, at least four of $R^1$, $R^2$, $R^3$, $R^4$, and $R^5$ are fluorine atoms.

5. The process of any one of the preceding clauses, wherein the total number of fluorine atoms is 4 to 18.

6. The process of any one of clauses 1 to 5, wherein the value of fluorine to carbon ratio (F/C) of less than or equal to 0.81.

7. The process of any one of clauses 1 to 5, wherein the value of fluorine to carbon ratio (F/C) of less than or equal to 0.80.

8. A process comprising:
polymerizing ethylene and optionally one or more α-olefin monomers in a solution polymerization reactor in the presence of a catalyst system, wherein the catalyst system comprises a procatalyst and an activator, wherein the activator comprises a anion and a cation, the anion having a structure according to formula (II):

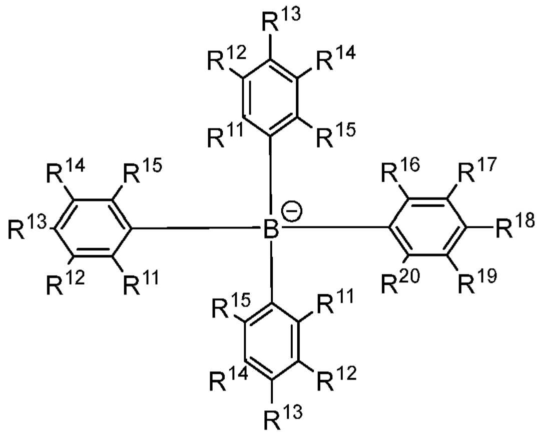

(II)

where:

B is boron atom;

each $R^{11}$ and each $R^{15}$ is selected from -H, fluorine atom, or $-CF_3$;

each $R^2$, $R^3$, and $R^4$ is selected from -H, fluorine atom, $(C_1-C_{40})$hydrocarbyl, $(C_1-C_{40})$heterohydrocarbyl, provided that: (1) at least three of $R^{11}$, $R^{12}$, $R^{13}$, $R^{14}$, and $R^{15}$ on each individual ring are fluorine atoms or (2) at least one of $R^{11}$, $R^{12}$, $R^{13}$, $R^{14}$, and $R^{15}$ on each individual ring is $-CF_3$;

$R^{16}$, $R^{17}$, $R^{18}$, $R^{19}$, and $R^{20}$ are independently selected from -H, fluorine atom, $-CF^3$, $(C_1-C_{40})$hydrocarbyl, $(C_1-C_{40})$heterohydrocarbyl, $-OR^C$, $-SiR^C_3$, and optionally $R^{17}$ and $R^{18}$ are connected to form a ring; where $R^C$ is -H or $(C_1-C_{20})$hydrocarbyl;

wherein the structure according to formula (II) does not include:

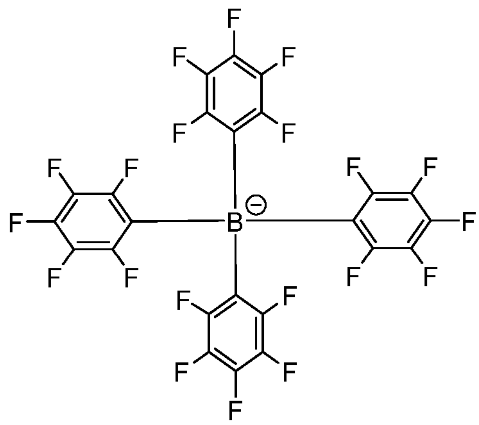

obtaining a produced polymer; and

heating the produced polymer to a thermal decomposition temperature for at least 1 minute.

9. The polymerization process according to any one of the preceding clauses, wherein the countercation has a formal change of positive one (+1).

10. The polymerization process according to any one of the preceding clauses, wherein the cation is $^+N(H)R^N_3$, where each $R^N$ is chosen from $(C_1-C_{20})$alkyl or $(C_6-C_{20})$aryl.

11. The process of any one of clauses 1 to 10, wherein the thermal decomposition temperature is greater than 200°C.

12. The process of any one of clauses 1 to 11, wherein the thermal decomposition temperature is at least 250°C.

13. The process of any one of clauses 1 to 12, wherein the thermal decomposition temperature is from 200°C to 500°C.

14. The process of any one of clauses 1 to 13, wherein the produced polymer is heated at the thermal decomposition

temperature for at least 5 minutes.

15. The process of any one of clauses 1 to 14, wherein the produced polymer is heated at the thermal decomposition temperature for 5 to 30 minutes.

16. The process of any one of clauses 1 to 15, wherein the produced polymer is heated at the thermal decomposition temperature for at least 10 minutes.

17. The process of any one of clauses 1 to 16, wherein the procatalyst is a metal-ligand complex.

18. The process of any one of clauses 1 to 17, wherein the procatalyst is a bis(phenylphenoxy) metal-ligand complex, a constrained geometry metal-ligand complex, a pyridylamido metal complex, or a phenoxyimine metal complex.

## Claims

**1.** A polymerization process comprising contacting ethylene and optionally one or more α-olefin monomers in a solution polymerization reactor in the presence of a catalyst system at a temperature of 120°C to 200°C, wherein the catalyst system comprises a procatalyst and an activator, wherein the activator comprises a anion and a cation, the anion is selected from:

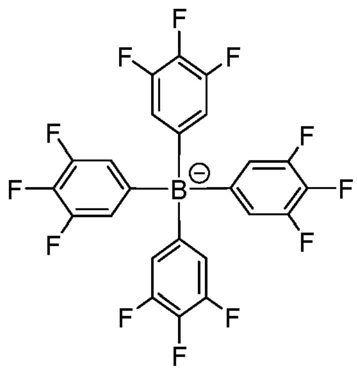

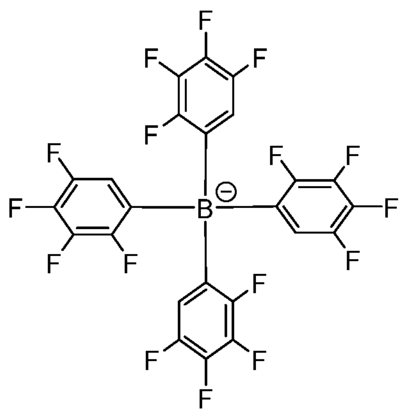

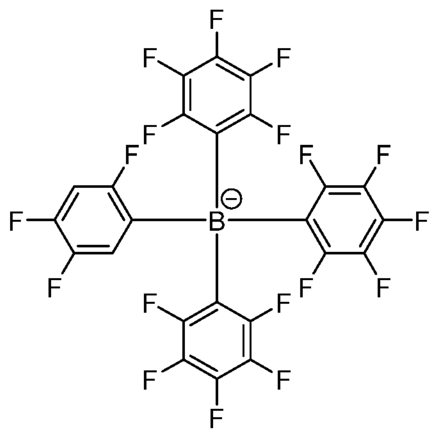

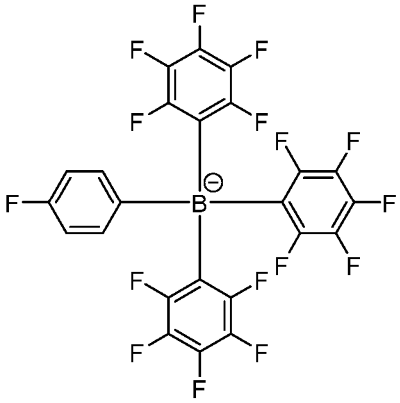

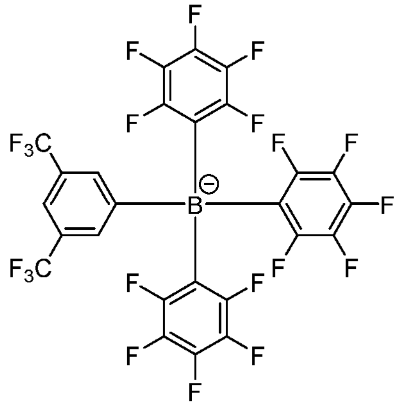

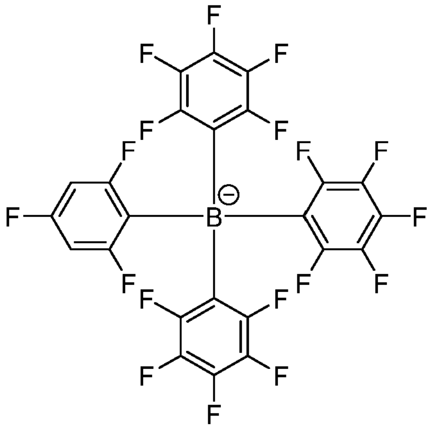

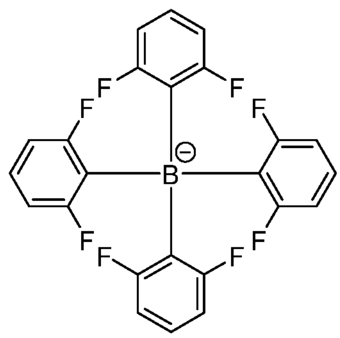

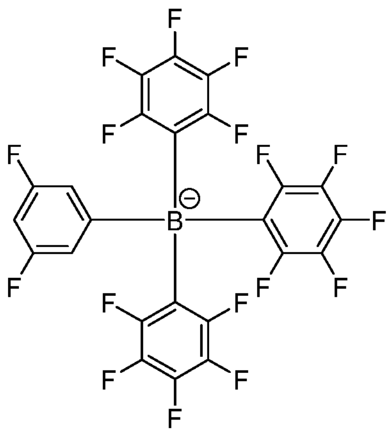

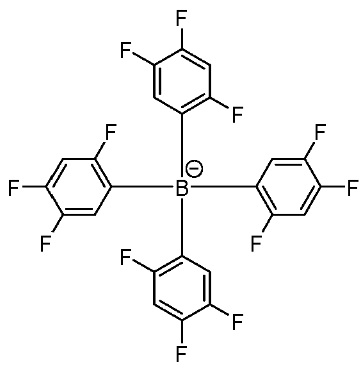

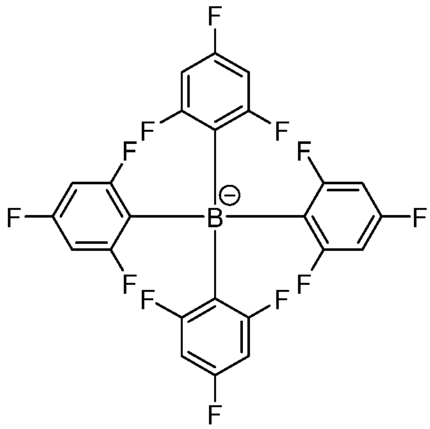

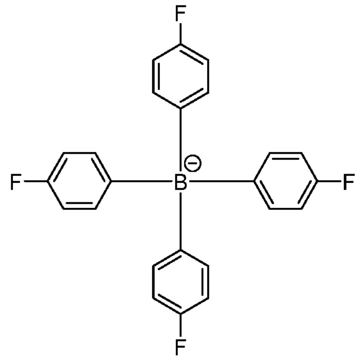

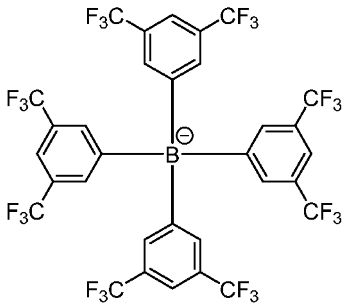

and

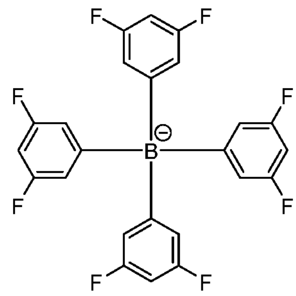

;

and wherein the cation is $+N(H)(C_{18}H_{37})_2Me$.

2. The process of claim 1, wherein the anion has a thermal percent decomposition of greater than 10% as measured by Thermal Gravimetric Analysis.

3. The process of claim 1, wherein the procatalyst is a metal-ligand complex.

4. The process of claim 1, wherein the procatalyst is a bis(phenylphenoxy) metal-ligand complex, a constrained geometry metal-ligand complex, a pyridylamido metal complex, or a phenoxyimine metal complex.

5. An activator selected from:

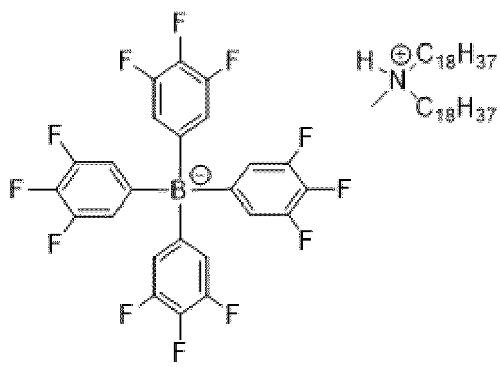

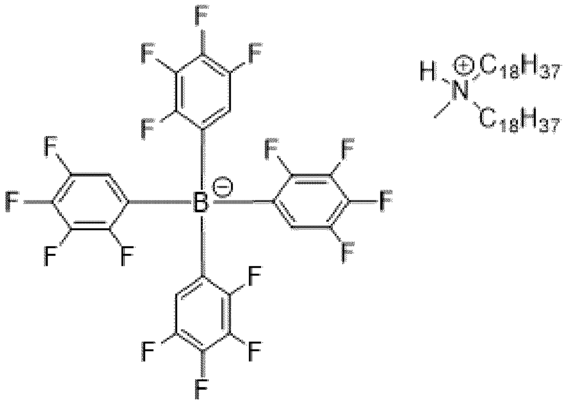

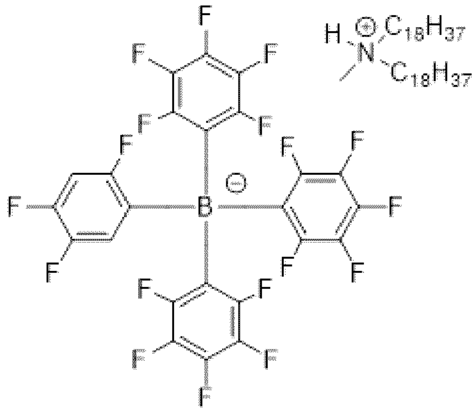

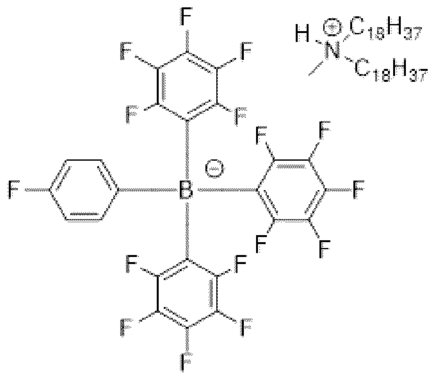

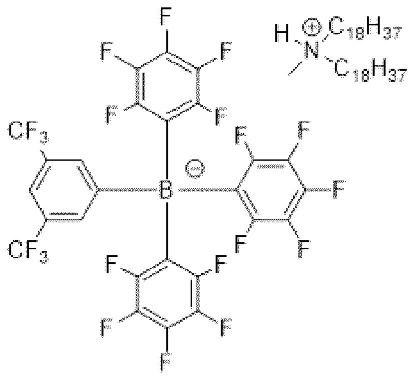

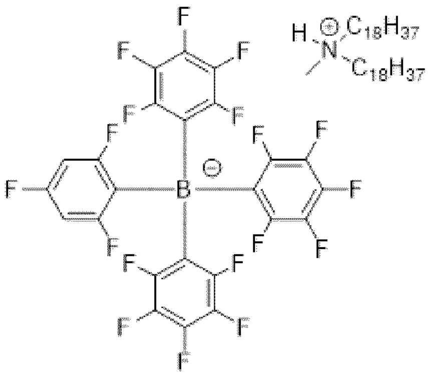

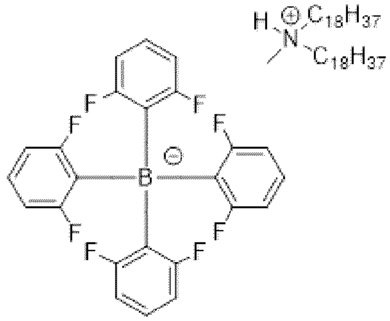

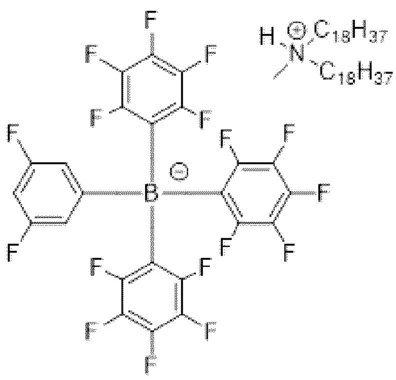

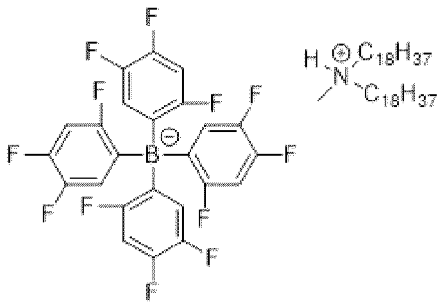

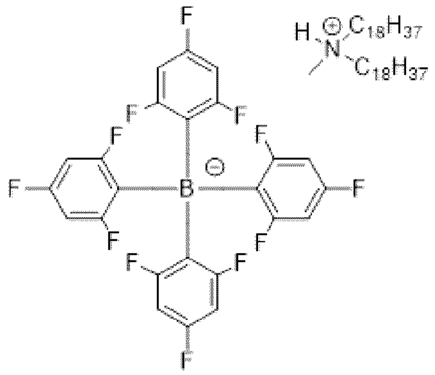

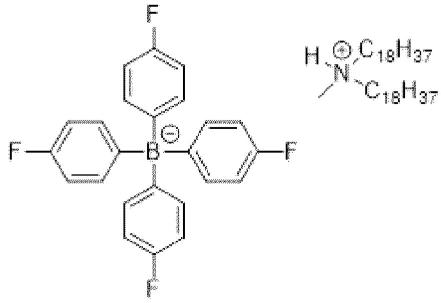

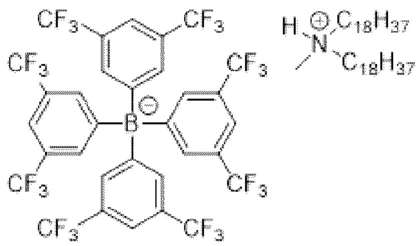

and

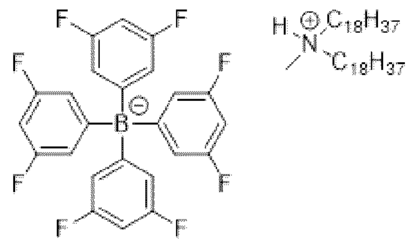

.

6. The process of claim 1, wherein a molar ratio of the activator to the procatalyst is from 1:10,000 to 1000:1, from 1:5000 to 100:1, from 1:100 to 100:1 from 1:10 to 10:1, from 1:5 to 1:1, or from 1.25:1 to 1:1.

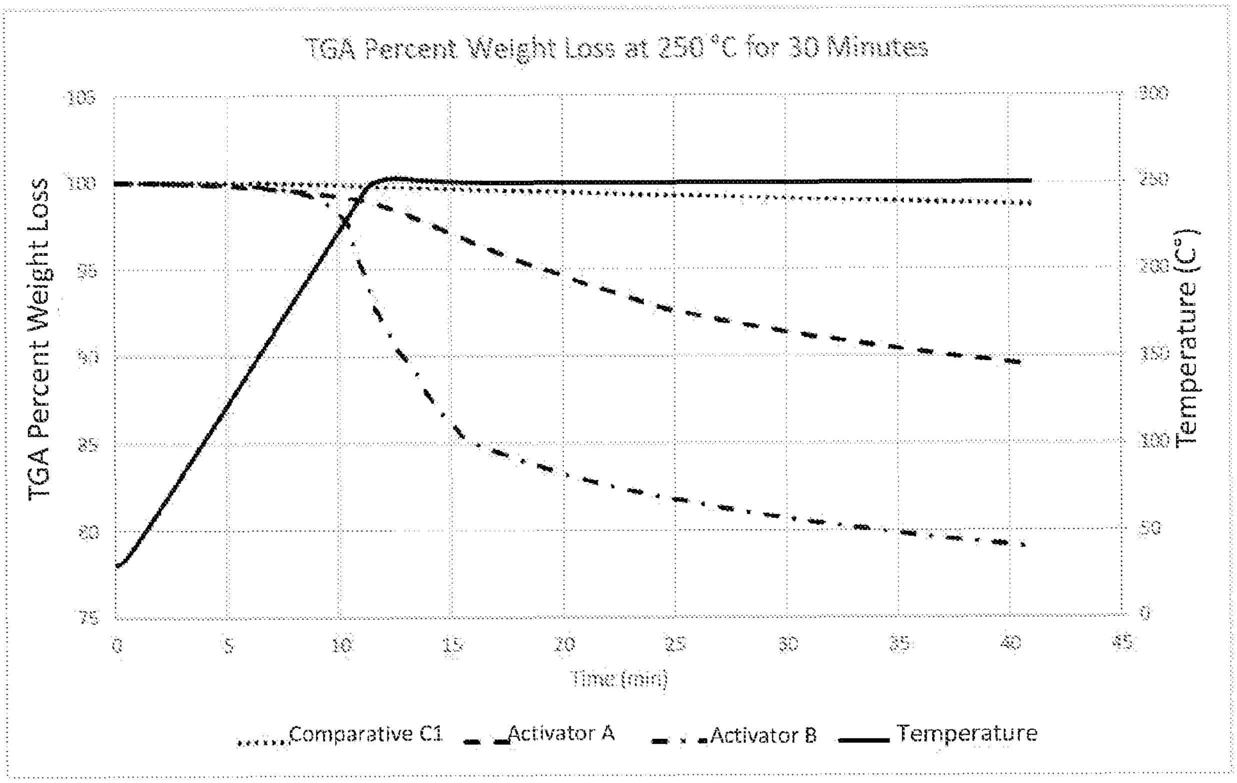
TGA Percent Weight Loss at 250 °C for 30 Minutes
TGA Percent Weight Loss
Temperature (C°)
Time (min)
Comparative C1
Activator A
Activator B
Temperature

FIG. 1

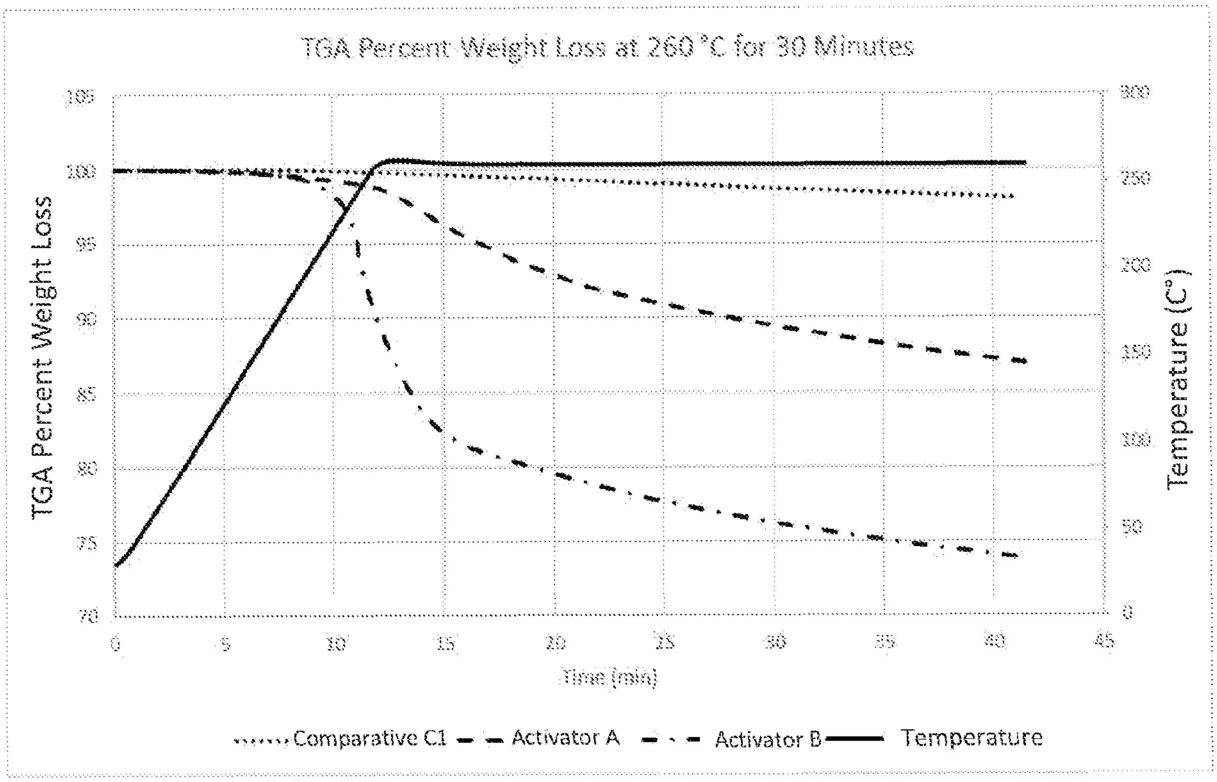
TGA Percent Weight Loss at 260 °C for 30 Minutes
TGA Percent Weight Loss
Temperature (C°)
Time (min)
Comparative C1
Activator A
Activator B
Temperature

FIG. 2

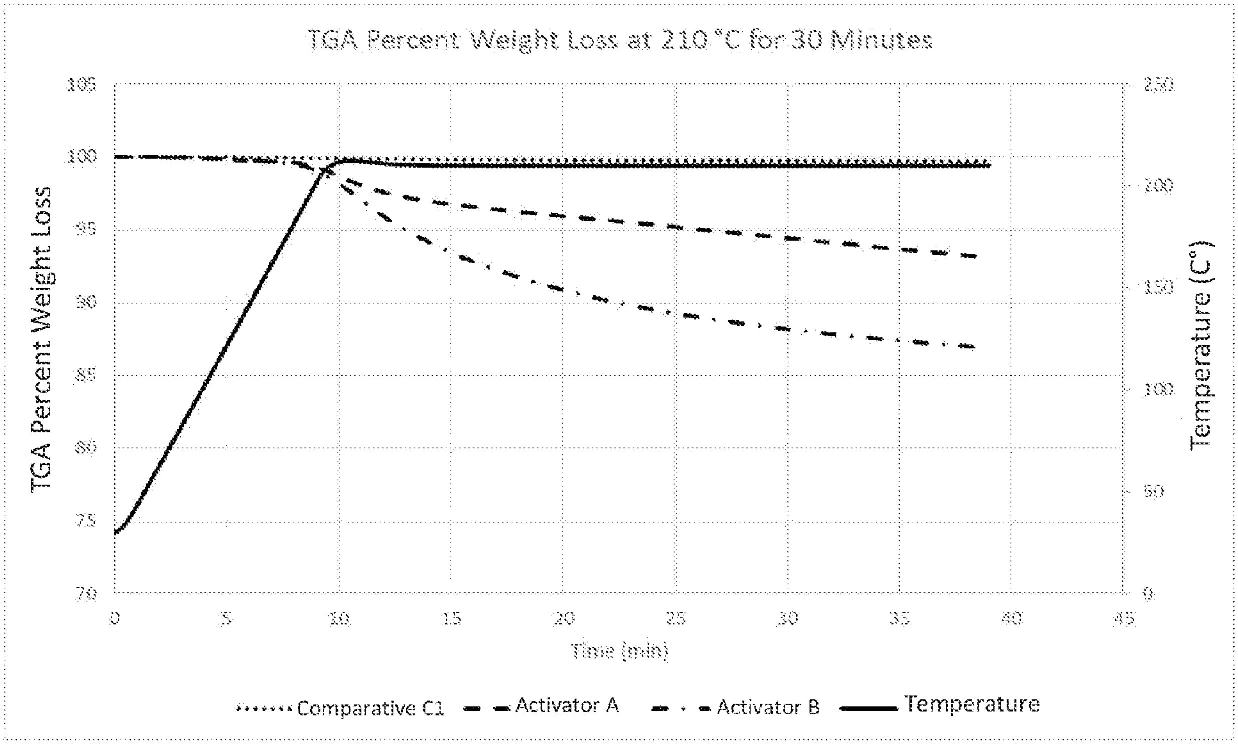
TGA Percent Weight Loss at 210 °C for 30 Minutes
TGA Percent Weight Loss
Temperature (C°)
Time (min)
105
100
95
90
85
80
75
70
250
200
150
100
50
0
0
5
10
15
20
25
30
35
40
45
Comparative C1
Activator A
Activator B
Temperature

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63242751 A
- US 8372927 B
- WO 2010022228 A
- WO 2011102989 A
- US 6953764 B
- US 6900321 B
- WO 2017173080 A
- US 7650930 B
- US 6777509 B
- WO 9941294 A
- US 6869904 B
- WO 2007136496 A
- US 9243090 B2
- WO 2014209927 A1, Arriola, D. J.; Bailey, B. C.; Klosin, J.; Lysenko, Z.; Roof, G. R.; Smith, A. J
- WO 2015200743 A1


### Non-patent literature cited in the description


- **LI, H** ; **MARKS, T. J**. *Proc. Natl. Acad. Sci. U. S. A.*, 2006, vol. 103, 15295-15302
- **LI, H** ; **LI, L** ; **SCHWARTZ, D J** ; **METZ, M. V** ; **MARKS, T. J.** ; **LIABLE-SANDS, L.** ; **RHEINGOLD, A. L**. *J. Am. Chem. Soc.*, 2005, vol. 127, 14756-14768
- **MCINNIS, J. P** ; **DELFERRO, M.** ; **MARKS, T. J.** *Acc. Chem. Res*, 2014, vol. 47, 2545-2557
- **DELFERRO, M** ; **MARKS, T. J.** *Chem. Rev*, 2011, vol. 111, 2450-2485
- **ARRIOLA, D. J.** ; **CARNAHAN, E. M** ; **HUSTAD, P. D** ; **KUHLMAN, R. L** ; **WENZEL, T. T.** *Science*, 2006, vol. 312, 714-719
- **MAKIO, H** ; **TERAO, H** ; **IWASHITA, A** ; **FUJITA, T.** *Chem. Rev.*, 2011, vol. 111, 2363-2449
- **STÜRZEL, M** ; **MIHAN, S** ; **MÜLHAUPT, R**. *Chem. Rev.*, 2016, vol. 116, 1398-1433
- **BUSICO, V**. *Dalton Transactions*, 2009, 8794-8802
- **KLOSIN, J** ; **FONTAINE, P. P** ; **FIGUEROA, R.** *Acc. Chem. Res*, 2015, vol. 48, 2004-2016
- **WILLIAMS** ; **WARD**. *J. Polym. Sci., Polym. Let.*, 1968, vol. 6, 621
- **PANGBORN, A. B** ; **GIARDELLO, M. A** ; **GRUBBS, R. H.** ; **ROSEN, R. K** ; **TIMMERS, F. J.** Safe and Convenient Procedure for Solvent Purification. *Organometallics*, 1996, vol. 15 (5), 1518-1520